# EUROPÄISCHE PATENTSCHRIFT

(11) **EP 4 232 940 B1**
(45) Veröffentlichungstag und Bekanntmachung des Hinweises auf die Patenterteilung: **18.03.2026**
(21) Anmeldenummer: 21786824.9
(22) Anmeldetag: 29.09.2021
(51) Int. Cl.: G06K 1/12, G06K 13/077, G06K 17/00, B41J 13/12, B41J 29/02, B42D 25/405, B42D 25/41, G06K 19/077

(54) **VORRICHTUNG UND VERFAHREN ZUM BEARBEITEN VON DOKUMENTEN**
DEVICE AND METHOD FOR PROCESSING DOCUMENTS
DISPOSITIF ET PROCÉDÉ DE TRAITEMENT DE DOCUMENTS

(30) Priorität: 23.10.2020 DE 102020128018
(43) Veröffentlichungstag der Anmeldung: 30.08.2023
(73) Patentinhaber: MÜHLBAUER GMBH & CO. KG, 93426 Roding (DE)
(72) Erfinder: DABROWSKI, Hubert, 09113 Chemnitz (DE); GÜNTHER, Andy, 09477 Steinbach (DE)
(74) Vertreter: Platzöder Patentanwaltsgesellschaft mbH
(86) Internationale Anmeldenummer: PCT/EP2021/076879
(87) Internationale Veröffentlichungsnummer: WO 2022/083994

(56) Entgegenhaltungen:
- EP-A2- 1 435 587
- WO-A1-2011/154628
- CN-A- 106 446 999
- DE-A1- 102006 061 214
- DE-A1- 102008 051 516

## Beschreibung

Die vorliegende Erfindung betrifft eine Vorrichtung und ein Verfahren zum Bearbeiten, insbesondere zum Personalisieren, von Dokumenten, wie beispielsweise kartenförmigen oder buchförmigen Ausweisdokumenten.

Aus dem Stand der Technik ist eine Vielzahl verschiedener Typen von personalisierten Dokumenten, insbesondere in Kartenform oder Buchform bekannt. So gehören beispielsweise buchartige Passdokumente oder einzelne Seiten davon (z.B. die sog. "Pass-Inhaberseite" oder Papierseiten), Ausweiskarten und viele Arten von personalisierten Chipkarten, etwa Bankkarten, Kreditkarten, Ausweiskarten, Mitgliedskarten, Zugangsberechtigungskarten usw. oder personenbezogene (meist kartenförmige) Etiketten jeweils zur Gruppe der personalisierten Dokumente.

Dabei bedeutet "Personalisierung" bzw. "personalisiert", dass das entsprechende Dokument eine dokumenten individuelle Information enthält oder trägt, die typischerweise einem Inhaber des Dokuments zugeordnet ist. So kann die Information etwa in einigen Fällen den Inhaber identifizieren, beispielsweise mittels seines Namens, seines Passphotos, einer Identitätsnummer oder anderer Merkmale, die auf dem Dokument aufgedruckt, anderweitig aufgebracht oder eingebracht oder in ihm, insbesondere in Form von Daten, gespeichert sind. Die Personalisierung kann dabei insbesondere individuell auf eine einzelne Person bezogen sein, oder aber auch auf eine bestimmte begrenzte Gruppe von Personen, beispielsweise Mitarbeiter eines Unternehmens.

Anstelle oder zusätzlich zu einer Personalisierung von Dokumenten kann anwendungsabhängig vorgesehen sein, dass eine Mehrzahl von Dokumenten auf dieselbe Art und Weise bearbeitet wird, beispielsweise um jedes Dokument mit einer für alle Dokumente gleichen und daher nicht dokumentenindividuellen Information zu versehen.

Das Bearbeiten der Dokumente zum versehen derselben mit dokumentenindividueller und/oder nicht dokumentenindividueller Information kann dabei insbesondere mittels Druckens, mittels Gravur oder, insbesondere im Falle einer Kunststoffoberfläche, mittels gezielter lokaler Verfärbung des Oberflächenmaterials des Dokuments durch Energieeinwirkung, insbesondere mittels eines geeigneten Lasers erfolgen.

DE 10 2008 051 516 A1 offenbart eine Codiervorrichtung und ein Verfahren zum Codieren für Datenträger, insbesondere Chipkarten, mit einer Transporteinrichtung zum Transport einer Mehrzahl an Datenträgern in eine erste Transportrichtung einer Transportebene und einer Dreheinrichtung mit einer Mehrzahl an ringartig angeordneten Codierstationen, die jeweils ein Aufnahmefach zum Aufnehmen jeweils eines Datenträgers aufweisen, wobei eine Drehachse der Dreheinrichtung senkrecht zu der Transportebene und der ersten Transportrichtung ausgerichtet ist. Die unabhängigen Ansprüche sind gegen dieses Dokument abgegrenzt.

EP 1 435 587 A2 offenbart eine Einrichtung zum Bearbeiten von Karten, mit mindestens einer Bahn für den Kartentransport, mindestens einer im Bereich der Bahn befindlichen Bearbeitungsstation, die zumindest einen bewegten Träger mit mehreren Haltevorrichtungen aufweist, welche zum Erfassen und Festhalten einer jeweiligen Karte während der Bewegungsphase des Trägers mit in dieser Zeit erfolgender Bearbeitung und zum Abgeben einer jeweiligen Karte nach der Bearbeitung dienen, und mit mindestens einer ersten Übergabevorrichtung und/oder zweiten Übergabevorrichtung zwischen der Bahn und dem Träger, wobei die Karten mittels der ersten Übergabevorrichtung von der Bahn abnehmbar und an die Haltevorrichtungen des Trägers übergebbar sind und mittels der zweiten Übergabevorrichtung von den Haltevorrichtungen des Trägers abnehmbar und auf die Bahn übergebbar sind.

DE 10 2006 061 214 A1 offenbart eine Vorrichtung zum Anbringen von personenbezogenen Angaben in sicherheitsrelevanten Dokumenten.

CN 106 446 999 A offenbart eine Chipkarten-Individualisierungsvorrichtung und eine damit ausgestattete Chipkarten-Produktionslinie. Die Smartcard-Individualisierungsvorrichtung umfasst ein Kartenausgabegerät, ein Kartenschreibgerät, ein Kartenaufnahmegerät und ein Kartenneuausgabegerät.

WO 2011/154628 A1 offenbart eine Maschine zum Bedrucken allgemein zylindrischer Gegenstände mit variablen Durchmessern.

In der Offenlegungsschrift DE 10 2006 031 024 A1 sind eine Druckeinrichtung und ein Verfahren zum Bedrucken von Personalisierungsdokumenten beschrieben. Die Druckeinrichtung umfasst dabei eine Druckeinheit zum Bedrucken eines in einem Druckbereich befindlichen Personalisierungsdokuments und eine Zuführeinheit zum nacheinander Zuführen der Personalisierungsdokumente in den Druckbereich. Die Zuführeinheit weist dabei mehrere verfahrbare Trägereinrichtungen auf, um ein zu bedruckendes Personalisierungsdokument aufzunehmen und in den Druckbereich und aus dem Druckbereich zu verfahren. Die Vorrichtung weist zudem eine Antriebseinrichtung auf, um die Trägereinrichtungen entlang einer Zuführungsrichtung auf verschiedenen senkrecht zur Zuführungsrichtung angeordneten Ebenen zu verfahren. Sie weist des Weiteren eine Steuereinheit zum Ansteuern der Antriebsvorrichtung auf, sodass die mehreren Trägereinrichtungen jeweils im Wechsel zwischen einer Aufnahmeposition, in der ein Personalisierungsdokument aufgenommen wird, und dem Druckbereich bewegt werden. Dies erfolgt so, dass die Antriebseinrichtung die mehreren Trägereinrichtungen beim Verfahren in Zuführrichtung auf den verschiedenen Ebenen aneinander vorbei führt.

Der vorliegenden Erfindung liegt die Aufgabe zugrunde, eine Vorrichtung und ein Verfahren bereitzustellen, mit der bzw. dem der Vorgang zur Bearbeitung von Dokumenten weiter verbessert werden kann. Insbesondere ist es wünschenswert, eine hohe Betriebssicherheit, einen hohen Dokumentendurchsatz und/oder eine hohe Druckqualität zu erreichen.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein erster Aspekt der Erfindung betrifft eine Vorrichtung zum Bearbeiten eines Dokuments. Die Vorrichtung weist auf: eine Bearbeitungseinrichtung zum Versehen eines zu bearbeitenden Dokuments, wenn sich dieses in einem Wirkbereich der Bearbeitungseinrichtung befindet, mit Informationen; und (ii) eine Verfahreinrichtung mit einer entlang einer Bahnkurve verfahrbaren Dokumententrägereinrichtung. Die Verfahreinrichtung ist konfiguriert: (i) ein zu bearbeitendes Dokument an einer Transferposition der Vorrichtung auf oder an einer Dokumenttragefläche der Dokumententrägereinrichtung aufzunehmen; (ii) mittels Verfahrens der Dokumententrägereinrichtung das aufgenommene Dokument zu seiner Bearbeitung in den Wirkbereich der Bearbeitungseinrichtung hinein und nach seiner Bearbeitung aus dem Wirkbereich der Bearbeitungseinrichtung heraus zu bewegen, wobei das Verfahren der Dokumententrägereinrichtung dazu wenigstens in einem Abschnitt der Bahnkurve zumindest bezüglich einer Bewegungsrichtungskomponente entlang einer bestimmten (ersten) Bewegungsrichtung erfolgt, die orthogonal zu einer durch drei verschiedene Punkte auf der Dokumenttragefläche definierten Ebene verläuft; und (iii) die Dokumenttragefläche um eine entlang der bestimmten (ersten) Bewegungsrichtung ausgerichtete Drehachse zu drehen, sodass das Dokument innerhalb des Wirkbereichs der Bearbeitungseinrichtung in Abhängigkeit vom Drehwinkel dieser Drehung wahlweise in einer von zumindest zwei auswählbaren verschiedenen Orientierungen des Dokuments relativ zur Bearbeitungseinrichtung bearbeitbar ist.

Unter "konfiguriert" oder "Konfiguration", "eingerichtet" bzw. Abwandlungen dieser Begriffe ist im Sinne der Erfindung zu verstehen, dass die entsprechende Vorrichtung bereits dazu hergerichtet oder einstellbar - d.h. konfigurierbar - ist, eine bestimmte Funktion zu erfüllen. Die Konfiguration bzw. Einrichtung kann dabei beispielsweise über eine entsprechende Einstellung von Parametern eines Prozessablaufs oder von hardware- oder softwareimplementierten Schaltern oder ähnlichem zur Aktivierung bzw. Deaktivierung von Funktionalitäten bzw. Einstellungen erfolgen. Insbesondere kann die Vorrichtung mehrere vorbestimmte Konfigurationen oder Betriebsmodi aufweisen, so dass das Konfigurieren mittels einer Auswahl einer dieser Konfigurationen bzw. Betriebsmodi erfolgen kann.

Die Drehachse kann insbesondere durch einen Schwerpunkt oder geometrischen Mittelpunkt der Dokumenttragefläche und/oder der Dokumententrägereinrichtung als Ganzes verlaufen. Die bestimmte Bewegungsrichtung ist im Sinne eines Richtungsvektors im Raum zu verstehen und definiert somit eine ganze Klasse von Richtungspfeilen, die in Richtung, Betrag und Orientierung übereinstimmen.

Unter einer "Bearbeitungseinrichtung" im Sinne der Erfindung ist ein Subsystem der Vorrichtung zum Bearbeiten eines Dokuments zu verstehen, die dazu eingerichtet ist, ein Dokument mit Informationen zu versehen. Dazu kann die Bearbeitungseinrichtung insbesondere eine Druckeinrichtung, beispielsweise einen Tintenstrahldrucker oder einen Drop-on-Demand Drucker (DoD-Drucker), einen Markierungslaser oder einen Programmierkopf zum Schreiben von als Daten vorliegenden Informationen auf einen in dem Dokument vorhandenen Datenspeicher aufweisen. Auch kann die Bearbeitungseinrichtung multifunktional sein und diesem Zwecke mehrerer verschiedenen Dokumentenbearbeitungsfunktionalitäten aufweisen, wie beispielsweise Tintenstrahldrucken und Laserbehandlung. Im Falle des Bedruckens, können die Informationen insbesondere monochrom oder in Farbe auf das Dokument aufgebracht werden. Darüber hinaus ist es möglich, dass die Bearbeitungseinrichtung eine Kombination aus zumindest einer Druckeinrichtung zum Aufbringen von Tinte sowie mindestens eine der jeweiligen Druckeinrichtung nachgeordnete zusätzliche Nachbehandlungseinrichtung für die jeweilige Tinte, insbesondere eine Lichtquelle zum Trocknen der Tinte und/oder eine Quelle für ultraviolettes Licht zum Aushärten UV-empfindlicher Tinten aufweist. Zudem kann die Bearbeitungseinrichtung zusätzlich oder alternativ dazu eingerichtet sein, eine transparente Tinte oder Beschichtung, insbesondere mittels einer weiteren dafür geeigneten Druckeinrichtung, aufzubringen (z.B. "Liquid Coating"). Auch können optional in der Vorrichtung zum Bearbeiten von Dokumenten mehrere Bearbeitungseinrichtungen vorgesehen sein, insbesondere so, dass sie die Dokumente seriell oder parallel verarbeiten. Verschiedene Bearbeitungseinrichtungen können in einigen Varianten dazu auch unterschiedliche Verfahrensschritte ausführen, wie etwa Bedrucken einerseits und Schreiben von elektronischen Daten in einen Speicher des Dokuments andererseits.

Die Informationen, mit denen das Dokument im Rahmen seiner Bearbeitung durch die zumindest eine Bearbeitungseinrichtung versehen werden kann, können insbesondere dokumentindividuelle Informationen, insbesondere "Personalisierungsinformationen" und/oder nicht-dokumentindividuelle Informationen umfassen.

Unter dem "Wirkbereich" der Bearbeitungseinrichtung ist im Sinne der Erfindung dementsprechend ein räumlicher Bereich an, in oder im Umfeld der Bearbeitungseinrichtung zu verstehen, in dem das Versehen des Dokuments mit den Informationen auftritt. Insbesondere kann dies derjenige räumliche Bereich sein, in dem (i) im Falle einer Bedruckung die Drucktinte auf das Dokument aufgebracht wird, (ii) im Falle einer Laserbehandlung die oberflächenverändernde Wirkung des Lasers auf der Dokumentenoberfläche auftritt, oder (iii) im Falle einer Programmierung eine Datenübertragung auf einen in den Dokument vorhandenen Datenspeicher auftritt, beispielsweise mittels elektrischer Kontaktierung, Induktion oder kurzreichweitiger elektromagnetischer Strahlung.

Unter einer "Dokumententrägereinrichtung" im Sinne der Erfindung ist eine Aufnahmevorrichtung für ein zu bearbeitendes Dokument zu verstehen, das dazu vorgesehen ist, das Dokument während des Bearbeitungsvorgangs in den Wirkbereich der Bearbeitungseinrichtung zu überführen und dabei zu tragen. Dazu kann die Dokumententrägereinrichtung insbesondere konfiguriert sein, das Dokument (i) tablettartig zu tragen, (ii) zumindest teilweise in einem Hohlraum (Kavität) der Dokumententrägereinrichtung aufzunehmen, oder (iii) mittels einer Fixiereinrichtung an oder in der Dokumententrägereinrichtung zu fixieren, jeweils um es beim Verfahren der Dokumententrägereinrichtung mit dieser mit zu bewegen.

Unter einer "Dokumenttragefläche" im Sinne der Erfindung ist insbesondere eine Fläche an der Oberfläche der Dokumententrägereinrichtung zu verstehen, die dazu konfiguriert und vorgesehen ist, bei der Aufnahme eines zu bearbeitenden Dokuments mit diesem in mechanischen Kontakt zu kommen, um das Dokument während des Durchlaufens der Bahnkurve der Dokumententrägereinrichtung zu tragen bzw. zu führen. Die Dokumententragefläche kann insbesondere, zumindest abschnittweise, eben sein.

Unter einer "Bahnkurve" im Sinne der Erfindung ist eine, insbesondere endlich lange, Bewegungskurve eines Objekts, hier speziell einer Dokumententrägereinrichtung, zu verstehen. Die Bahnkurve kann insbesondere eine geschlossene Schleifenform aufweisen, bei der das Objekt ausgehend von einem auf der Bewegungskurve liegenden Knotenpunkt nach dem Durchlaufen der Bewegungskurve, die dann einen nichtleeren Flächenbereich umschließt, zu dem Knoten zurückkehrt und somit den Knotenpunkt mit sich selbst mittels einer durch die Bewegungskurve gegebenen geschlossenen Schleife verbindet. Eine reine Hin- und Her-Bewegung von bzw. zu einem Knotenpunkt, beispielsweise entlang eines linearen Wegs, wie etwa einer Schiene oder sonstigen linearen Führung, stellt somit zwar eine Bahnkurve im o.g. Sinne, aber keine geschlossene schleifenförmige Bahnkurve dar. Die Bahnkurve kann insbesondere in einem ersten Bahnkurvenabschnitt eine Bewegung des Objekts entlang einer geschlossenen Schleifenform und in einem anderen Bahnkurvenabschnitt eine reine Hin- und Her-Bewegung des Objekts definieren. Die Bahnkurve kann somit in vielen Fällen auch Bahnkurvenabschnitte aufweisen, die Richtungskomponenten entlang zumindest einer zu der bestimmten (ersten) Bewegungsrichtung orthogonalen zweiten bzw. dritten Bewegungsrichtung aufweisen.

Bei einer solchen erfindungsgemäßen Vorrichtung kann die Orientierung der Dokumententragefläche und somit des zu bearbeitenden Dokuments relativ zu der Bearbeitungseinrichtung variiert werden. Insbesondere ist es denkbar, dafür einen Satz von zumindest zwei diskreten verschiedenen auswählbaren Orientierungen oder sogar eine stufenlos auswählbare Orientierung vorzusehen.

Des Weiteren erlaubt es die Vorrichtung, die Bearbeitungseinrichtung innerhalb der Vorrichtung ortsfest und/oder drehfest vorzusehen und stattdessen nur das zu bearbeitende Dokument mittels der beweglichen Dokumententrägereinrichtung zu bewegen, um sie der Bearbeitungseinrichtung zuzuführen bzw. nach der Bearbeitung von dieser weg zu führen. Somit kann der Gefahr von Dejustierungen oder gar Beschädigungen der oftmals sehr empfindlichen Bearbeitungseinrichtungen, wie etwa Druckköpfen, wie sie bei alternativen Vorrichtungen, bei denen die Bearbeitungseinrichtung oder Teile davon bewegt werden müssen, effektiv begegnet werden.

Aufgrund der Drehbarkeit der Dokumenttrageeinrichtung ist es insbesondere auch möglich, bei ortsfester und/oder drehfester Bearbeitungseinrichtung dennoch ein und dasselbe Dokument selbst dann ohne Entnehmen des Dokuments von der Dokumentententrägereinrichtung an verschiedenen Stellen des Dokuments zu bearbeiten, wenn nicht alle diese Stellen gleichzeitig im Wirkbereich der Bearbeitungseinrichtung liegen können.

Da bei einigen denkbaren Bearbeitungen des Dokuments, insbesondere bei einem zeilenweisen oder matrixförmigen Bearbeitungsmuster, wie dies etwa bei einem Tintenstrahldruck der Fall ist, Bearbeitungsergebnisse entstehen, die von der relativen Orientierung des Dokuments bezüglich der Bearbeitungseinrichtung während des Bearbeitungsvorgangs abhängen, kann die Vorrichtung insbesondere auch vorteilhaft dazu genutzt werden eine Steigerung der Fälschungssicherheit des mit den Informationen versehenen Dokumentes zu erreichen. Die Ergebnisse der Bearbeitung bei verschiedenen Orientierungen des Dokuments können in diesem Sinne als Sicherheitsmerkmal genutzt werden.

Nachfolgend werden bevorzugte Ausführungsformen der Vorrichtung beschrieben, die jeweils, soweit dies nicht ausdrücklich ausgeschlossen wird oder technisch unmöglich ist, beliebig miteinander kombiniert werden können und die gleichermaßen für das im Anschluss daran beschriebene Verfahren nach dem zweiten Aspekt der Erfindung entsprechend anwendbar sind.

Gemäß einigen Ausführungsformen ist die Verfahreinrichtung des Weiteren konfiguriert, die Dokumententrägereinrichtung so zu verfahren, dass an zumindest einem Punkt der Bahnkurve die Dokumenttragefläche der Dokumententrägereinrichtung vollständig innerhalb des Wirkbereichs der Bearbeitungseinrichtung liegt. Dies kann vorteilhaft dazu genutzt werden, das Dokument durch entsprechendes Drehen der Dokumenttragefläche, entweder vor dem Beginn oder nach dem Beginn und vor dem Ende des Bearbeitungsprozesses durch die Bearbeitungseinrichtung, zu drehen, sodass insgesamt die Bearbeitung des Dokuments bei zumindest zwei verschiedenen relativen Orientierungen des Dokuments relativ zur Bearbeitungseinrichtung erfolgt, ohne dass dazu ein Verfahren der Dokumententrägereinrichtung, jenseits der Drehung, in diesem Zeitraum erforderlich wäre.

Gemäß einigen Ausführungsformen ist die Vorrichtung konfiguriert, das Dokument mit der Bearbeitungseinrichtung in deren Wirkbereich im Sinne einer dokumentindividuellen Personalisierung zu bearbeiten. Die Vorrichtung kann dazu insbesondere dem zu bearbeitenden Dokument zugeordnete dokumentenindividuelle Informationen, insbesondere Personalisierungsdaten, in einem Speicher vorhalten oder über eine Schnittstelle von einer Informationsquelle empfangen und die Bearbeitungseinrichtung veranlassen, bei der Bearbeitung des Dokuments dieses mit den dokumentenindividuellen Informationen zu versehen. Die Vorrichtung ist bei diesen Ausführungsformen somit insbesondere in der Lage, eine Personalisierung oder andere dokumentenindividuelle Bearbeitung des Dokuments vorzunehmen.

Gemäß einigen Ausführungsformen weist die Dokumententrägereinrichtung einen um die Drehachse drehbaren Drehteller mit der Dokumenttragefläche sowie eine den Drehteller zumindest abschnittsweise umgebende und bezüglich der Drehachse drehfeste Rahmenstruktur auf. Eine solche Konstruktion erlaubt es insbesondere, das Verfahren der Dokumententrägereinrichtung von der Drehung der Dokumenttragefläche zu entkoppeln, insbesondere so, dass für das Verfahren der Dokumententrägereinrichtung entlang ihrer Bahnkurve keine Rücksicht auf eine bestimmte Drehstellung oder gerade stattfindende Drehung der Dokumenttragefläche genommen werden muss.

Gemäß einigen dieser Ausführungsformen ist der Drehteller über eine Welle angetrieben, die zugleich als mechanische Führung für zumindest einen Bahnkurvenabschnitt der Bewegung der Dokumententrägereinrichtung ausgestaltet ist. Dies ermöglicht eine besonders raumsparende Implementierung der Vorrichtung. Außerdem lassen sich so unerwünschte Behinderungen oder Einschränkungen der Verfahrbewegung durch Elemente eines Antriebs für den Drehteller effektiv reduzieren oder sogar vollständig vermeiden. Der genannte Bahnkurvenabschnitt kann insbesondere ein solcher sein, der ausschließlich entlang der bestimmten (ersten) Bewegungsrichtung verläuft, was es insbesondere ermöglicht die Welle gleichgerichtet mit der bestimmten (ersten) Bewegungsrichtung und somit der Drehachse des Drehtellers anzuordnen, so dass keine Richtungsumsetzung zwischen Welle und Drehteller erforderlich ist.

Gemäß einigen Ausführungsformen weist die Vorrichtung des Weiteren eine Kollisionssensoreinrichtung auf, die konfiguriert ist, einen zwischen der Dokumententrägereinrichtung und der Bearbeitungseinrichtung liegenden Raumbereich zu überwachen und dabei ein bestimmtes Signal auszugeben, wenn eine drohende oder bereits aufgetretene Kollision zwischen dem auf der Dokumententragefläche gelagerten Dokument und der Bearbeitungseinrichtung detektiert wird. Vorteilhaft kann dann beim Auftreten des Signals eine Steuerung des Verfahrens der Dokumententrägereinrichtung und/oder einer Drehung der Dokumenttragefläche dahingehend ausgelöst werden, dass die drohende Kollision vermieden bzw. im Falle einer bereits aufgetretenen Kollision diese wieder aufgehoben oder eine momentane Relativbewegung zwischen der Dokumententrägereinrichtung und der Bearbeitungseinrichtung unterbrochen wird. So lässt sich die Wahrscheinlichkeit für das Auftreten solcher Kollisionen effektiv verringern und im Falle einer ggf. trotzdem aufgetretenen Kollision der Umfang einer möglichen Beschädigung des Dokuments, der Dokumententrägereinrichtung oder der Bearbeitungseinrichtung minimieren.

Gemäß einigen Ausführungsformen weist die Bearbeitungseinrichtung wenigstens ein Dokumentenbearbeitungselement, wie etwa einen Druckkopf oder einen Laser, zur Ausführung einer Bearbeitung des Dokuments auf, das innerhalb der Vorrichtung unbeweglich ist. Dies hat den Vorteil das einerseits für dieses Dokumentenbearbeitungselement keine Maßnahmen zur Ausführung und Steuerung seiner Bewegung vorgesehen werden müssen und andererseits aufgrund des Wegfalls einer solchen Bewegung Beschädigungen oder Dejustierungen vorgebeugt werden kann, die andernfalls durch bei der Bewegung auftretende Beschleunigungen, wie etwa Ruckbewegungen beim Anfahren, beim Anhalten, bei Richtungswechseln oder in Form von Vibrationen auftreten könnten.

Gemäß einigen Ausführungsformen ist die Dokumententrägereinrichtung die einzige Dokumententrägereinrichtung der Vorrichtung, welche eingerichtet ist, ein Dokument an der Transferposition aufzunehmen und entlang einer Bahnkurve in den Wirkbereich der Bearbeitungseinrichtung und anschließend wieder aus dem Wirkbereich heraus zu verfahren. Auf diese Weise ist eine maximale Flexibilität bezüglich der möglichen Bahnkurven der Dokumententrägereinrichtung ermöglicht, da nicht auf Bahnkurven anderer Dokumententrägereinrichtungen Rücksicht, insbesondere im Sinne eines Kollisionsschutzes oder einer Koordinierung bezüglich eines jeweiligen Aufenthalts an der Transferposition oder im Wirkbereich der Bearbeitungseinrichtung, genommen werden muss. Insbesondere erleichtert dies Bearbeitungsprozesse, bei denen die Dokumententrägereinrichtung zur Bearbeitung des Dokuments an verschiedenen Orten entlang der Bahnkurve zum Halt kommt oder die Bahnkurve ihre Richtung ändert, insbesondere eine Richtungsumkehr erfolgt.

Gemäß einigen Ausführungsformen weist die Vorrichtung des Weiteren eine Transporteinrichtung auf, die eingerichtet ist, entlang einer Transportstrecke ein zu bearbeitendes Dokument der Transferposition zur Aufnahme desselben durch die Dokumententrägereinrichtung zuzuführen und ein bereits von der Bearbeitungseinrichtung bearbeitetes und an der Transferposition von der Dokumententrägereinrichtung ausgegebenes Dokument von der Transferposition wegzuführen. Auf diese Weise kommt die Vorrichtung mit einer einzigen Transferposition aus, an der sowohl das Aufnehmen der Dokumente durch die Dokumententrägereinrichtung als auch das nachfolgende Ausgeben des entsprechenden Dokuments nach dessen Bearbeitung erfolgen. Dies liefert nicht nur den Vorteil, dass eine besonders kompakte Bauweise ermöglicht wird, sondern es ermöglicht zudem, dass Leerfahrten der Dokumententrägereinrichtung vermieden werden, da eine gerade entladene Dokumententrägereinrichtung unmittelbar anschließend an Ort und Stelle ohne dazwischenliegende Verfahrbewegung mit einem weiteren Dokument beladen werden kann. Auch dies dient der Steigerung des erreichbaren Durchsatzes. Zudem entfällt, insbesondere gegenüber der Lehre der DE 10 2006 031 024 A1, der Bedarf für separate, zusätzlich zu den Dokumententrägereinrichtung vorgesehene, Bestückungs- oder Entnahmeeinheiten, da die Dokumententrägereinrichtung unmittelbar von der Transporteinrichtung aus mit den Dokumenten beladen werden bzw. diese nach ihrer Prozessierung auf diese entladen.

Die vorausgehend beschriebene Bauweise der Vorrichtung kann gemäß einigen Ausführungsformen insbesondere so implementiert sein, dass die Verfahreinrichtung beidseitig der Transportstrecke jeweils eine Verfahreinheit zum Verfahren der Dokumententrägereinrichtung entlang ihrer Bahnkurve aufweist. Insbesondere erlaubt es eine solche Lösung auch, im Falle von bei der Bearbeitung des Dokuments auftretenden unregelmäßigen Verzögerungen, darauf flexibel durch entsprechende individuelle Ansteuerung der einzelnen Verfahreinheiten zu reagieren, um den kontinuierlichen Betrieb der Vorrichtung und damit den gewünschten hohen Durchsatz sicherstellen zu können.

Gemäß einigen Ausführungsformen ist die Vorrichtung des Weiteren konfiguriert, die Verfahrbewegung der Dokumententrägereinrichtung entlang ihrer Bahnkurve so durchzuführen, dass zumindest an der Transferposition ein Zwischenstopp erfolgt. Dies hat den Vorteil, dass das Beladen und das Entladen der Dokumententrägereinrichtung an der Transferposition bei ruhender Dokumententrägereinrichtung erfolgen kann, was die Komplexität der Umsetzung der Be- und Entladevorgänge vereinfacht und zu einer erhöhten Zuverlässigkeit dieser Vorgänge und somit des Gesamtbetriebs der Vorrichtung beitragen kann.

Gemäß einigen Ausführungsformen ist die Vorrichtung des Weiteren konfiguriert, wenn sich die Dokumententrägereinrichtung an der Transferposition befindet, ein gegenwärtig von der Dokumententrägereinrichtung getragenes und bereits vorausgehend durch die Bearbeitungseinrichtung bearbeitetes Dokument auszugeben und an dessen Stelle ein weiteres, noch durch die Bearbeitungseinrichtung zu bearbeitendes anderes Dokument durch die Dokumententrägereinrichtung aufzunehmen, bevor diese ihre Bewegung für einen erneuten Durchlauf ihrer Bahnkurve fortsetzt. So wird die Dokumententrägereinrichtung an Ort und Stelle an der Transferposition sowohl entladen als auch neu beladen, ohne dass dazwischen eine Leerfahrt der Dokumententrägereinrichtung stattfindet bzw. erforderlich ist. Somit ist eine weitere Steigerung des Durchsatzes der Vorrichtung erreichbar, da auf diese Weise der Anteil der Bahnkurve der Dokumententrägereinrichtung, entlang dem sie nicht mit einem Dokument zu dessen Prozessierung beladen sind, minimiert und insbesondere auf null reduziert werden kann.

Gemäß einigen Ausführungsformen ist die Bahnkurve der Dokumententrägereinrichtung so als geschlossene schleifenförmige Bahnkurve festgelegt, dass beim Betrieb der Vorrichtung diese Bahnkurve einen je Bahnkurvendurchlauf zweifach durchlaufenen Bahnkurvenabschnitt zwischen der Transferposition und einer ersten Zwischenposition aufweist, wobei dieser Bahnkurvenabschnitt einerseits im Rahmen einer Weg-Bewegung der Dokumententrägereinrichtung von der Transferposition zur ersten Zwischenposition und andererseits zeitlich versetzt dazu und in entgegengesetzter Richtung im Rahmen einer Hin-Bewegung der Dokumententrägereinrichtung von der ersten Zwischenposition zur Transferposition von der Dokumententrägereinrichtung durchlaufen wird. Mithilfe dieser Ausführungsformen lässt sich insbesondere die Bewegung der Dokumententrägereinrichtung entlang des zweifach durchlaufenden Bahnkurvenabschnitts bezüglich der Richtung und der Geschwindigkeit der Bewegung so gestalten, insbesondere auch variabel konfigurieren, dass unerwünschte Wechselwirkungen zwischen der Dokumententrägereinrichtung und der Transporteinrichtung im Bereich der Transferposition minimiert oder ganz vermieden werden können. Insbesondere lässt sich so auf einfache Weise eine unerwünschte Kollision der bewegten Dokumententrägereinrichtung mit der Transporteinrichtung vermeiden. Dazu kann beispielsweise die Bewegungsgeschwindigkeit der Dokumententrägereinrichtung in dem Bahnkurvenabschnitt gegenüber der Bewegungsgeschwindigkeit im sonstigen Bereich der Bahnkurve, insbesondere gegenüber der Bewegungsgeschwindigkeit auf dem Rückweg von der Bearbeitungseinrichtung, reduziert werden und/oder eine senkrechte Annäherung der Dokumententrägereinrichtung an die Transporteinrichtung vorgesehen werden, um tangentiale Bewegungskomponenten, welche zu Beschädigungen führen könnten, auszuschließen.

Bei einigen Weiterbildungen dieser Ausführungsformen weist die Bahnkurve der zumindest einen Dokumententrägereinrichtung des Weiteren eine zwischen dem Wirkbereich und der ersten Zwischenposition gelegene zweite Zwischenposition auf und die Vorrichtung ist des Weiteren konfiguriert, wahlweise eine Drehung der Dokumenttragefläche um die Drehachse an der zweiten Zwischenstation oder während des Durchlaufens eines zwischen der ersten Zwischenposition und der zweiten Zwischenposition gelegenen Bahnkurvenabschnitts der Bahnkurve der Dokumententrägereinrichtung auszuführen. So kann bereits vor dem Erreichen des Wirkbereichs und somit insbesondere ohne Zeitverzug eine ausgewählte Orientierung des auf der Dokumententragefläche aufgenommenen Dokuments für seine nachfolgende Bearbeitung durch die Bearbeitungsvorrichtung bewirkt werden.

Gemäß einigen Ausführungsformen ist die Vorrichtung des Weiteren konfiguriert, insbesondere wahlweise, eine Drehung der Dokumenttragefläche um die Drehachse auszuführen, während sich die Dokumenttragefläche zumindest abschnittsweise im Wirkbereich der Bearbeitungseinrichtung befindet. Dies kann insbesondere vorteilhaft dafür genutzt werden, das Dokument an verschiedenen Stellen des Dokuments zu bearbeiten, die nicht gleichzeitig im Wirkbereich liegen können, oder um eine Bearbeitung von verschiedenen Stellen des Dokuments aus verschiedenen Bearbeitungsrichtungen aus, z.B. mit verschieden orientierten Druckmustern, zu ermöglichen. Ein möglicher Anwendungsfall, wo dies vorteilhaft genutzt werden kann, ist die Bearbeitung von aufgeschlagenen buchförmigen Dokumenten. Die Vorrichtung kann dazu insbesondere so konfiguriert sein, dass sie in einer ersten Orientierung des Dokuments zunächst eine erste aufgeschlagene Seite des Dokuments bearbeitet und nach einer Durchführung einer Drehung der Dokumenttragefläche und somit des darauf befindlichen Dokuments, die andere gerade aufgeschlagene Seite bearbeitet.

Bevorzugt ist dabei gemäß einiger dieser Ausführungsformen die Dokumenttragefläche so konfiguriert, dass dadurch die Abmessung des darauf aufnehmbaren Dokuments bezüglich zumindest einer entlang der Dokumententragefläche verlaufenden Erstreckungsrichtung auf eine jeweilige maximale Abmessung begrenzt ist und wenigstens eine solche maximale Abmessung kleiner oder gleich einer Abmessung des Wirkbereichs ist, so dass die Dokumententragefläche bei einer Drehung der Dokumenttragefläche innerhalb des Wirkbereichs der Bearbeitungseinrichtung zumindest bezüglich der zumindest einen Erstreckungsrichtung in dem Wirkbereich der Bearbeitungseinrichtung verbleibt.

Gemäß einigen Ausführungsformen ist die Vorrichtung des Weiteren konfiguriert, für den Fall, dass bevor oder während die Dokumenttragefläche im Wirkbereich der Bearbeitungseinrichtung um die Drehachse gedreht wurde, der Bearbeitung nachfolgend eine weitere Drehung der Dokumenttragefläche zur Herstellung der ursprünglichen oder einer anderen vorbestimmten Orientierung der Dokumenttragefläche auszuführen. Die weitere Drehung kann insbesondere eine weitere Drehung in derselben Drehrichtung wie eine vorangegangene Drehung oder aber in entgegengesetzter Drehrichtung sein. So kann insbesondere erreicht werden, dass das Dokument nachseinem Entladen von der Dokumententrägereinrichtung dieselbe Orientierung aufweist, wie zuvor bei seiner Aufnahme durch die Dokumententrägereinrichtung. Diese weitere Drehung ist insbesondere dann von Bedeutung, wenn die Orientierung des Dokuments zu seiner Bearbeitung dokumentindividuell erfolgt. Werden dann nacheinander mehrere Dokumente durch die Vorrichtung bearbeitet, kann so sichergestellt werden, dass alle Dokumente nach ihrem Laden dieselbe Orientierung aufweisen, was insbesondere eine weitere Bearbeitung der Dokumente in nachfolgenden Prozessschritten erleichtert.

Gemäß einigen Ausführungsformen ist die Vorrichtung des Weiteren konfiguriert, die Verfahrbewegung der Dokumententrägereinrichtung getaktet gemäß einem Systemtakt auszuführen, wobei die Bahnkurve der Dokumententrägereinrichtung in zumindest drei Bahnabschnitte unterteilt ist und jeweils einer oder zwei aufeinanderfolgende Bahnabschnitte je einzelnen Takt des Systemtakts durchlaufen werden. Die Verwendung eines Systemtakts erleichtert insbesondere eine zeitliche Abstimmung und Einhaltung einer zeitlichen Abfolge der verschiedenen während des Betriebs der Vorrichtung zum Einsatz kommenden Funktionalitäten der Vorrichtung, insbesondere eine zeitliche Abstimmung der Verfahrbewegung in den jeweiligen Bahnkurvenabschnitten mit der Bearbeitung des Dokuments durch die Bearbeitungseinrichtung.

Gemäß einigen Ausführungsformen ist die Bahnkurve der Dokumententrägereinrichtung so festgelegt, dass beim Betrieb der Vorrichtung diese Bahnkurve einen je Bahnkurvendurchlauf mehrfach durchlaufenen Bahnkurvenabschnitt aufweist, der durch den Wirkbereich verläuft, wobei bei zumindest zwei dieser Durchläufe durch den Bahnkurvenabschnitt während eines selben Bahnkurvendurchlaufs jeweils eine Bearbeitung eines durch die Dokumententrägereinrichtung aufgenommenen Dokuments durch die Bearbeitungseinrichtung erfolgt, während sich dabei die Dokumententrägereinrichtung im Wirkbereich befindet. So können mehrere Bearbeitungsvorgänge je Bahnkurvendurchlauf erfolgen, was insbesondere komplexere Bearbeitungen mittels verschiedener Bearbeitungsverfahren oder zur Ausbildung von einander überlagernden Bearbeitungen, beispielsweise Bedrucken und elektronischer Datentransfer oder Laserbearbeitung, je Dokument ermöglicht.

Gemäß einigen Ausführungsformen weist die Vorrichtung des Weiteren eine entlang der Bahnkurve der Dokumententrägereinrichtung dem Wirkbereich der Bearbeitungseinrichtung vorgelagerte Inspektionseinrichtung zum Detektieren der Lage eines von der Dokumententrägereinrichtung aufgenommenen Dokuments bezüglich der Dokumententrägereinrichtung und zur Bestimmung und Übermittlung zumindest eines diese Lage kennzeichnenden Lageparameters. Dabei ist die Bearbeitungseinrichtung konfiguriert, auf Basis von diesem zumindest einen Lageparameter eine Selbstkalibrierung zur Kompensation von etwaigen auf Basis des zumindest einen Lageparameters bestimmten Ausrichtungsabweichungen zwischen dem Dokument und der Bearbeitungseinrichtung vorzunehmen, um nachfolgend auf Basis dieser Selbstkalibrierung das Dokument unabhängig von seiner relativen Lage bezüglich der es tragenden Dokumententrägereinrichtung zu bearbeiten. Diese Maßnahmen dienen einer Qualitätsverbesserung im Hinblick auf ein korrekt ausgerichtetes Bearbeiten des Dokuments, insbesondere einer Aufbringung oder Einbringung einer Personalisierung auf bzw. in das Dokument. Insbesondere ist es daher möglich, auf spezielle Maßnahmen zur Ausrichtung des Dokuments gegenüber der Bearbeitungseinrichtung bzw. der Dokumententrägereinrichtung zu verzichten oder diese weniger genau auszugestalten, da eine gegebenenfalls noch erforderliche Ausrichtungskorrektur mittels der genannten Selbstkalibrierung erfolgen kann.

Speziell kann gemäß einigen darauf aufbauenden Ausführungsformen die Bearbeitungseinrichtung des Weiteren konfiguriert sein, (i) das Dokument durch Bedrucken zu bearbeiten; und (ii) im Rahmen der Selbstkalibrierung eine Anpassung eines Soll-Drucklayouts für eine Bedruckung des Dokuments mittels einer von dem zumindest einen Lageparameter abhängigen Transformation in ein tatsächlich zu druckendes, lagekompensiertes Drucklayout durchzuführen.

Auch kann gemäß weiterer Ausführungsformen die Bearbeitungseinrichtung des Weiteren konfiguriert sein (i) das Dokument durch Laserbehandlung zu bearbeiten; und (ii) im Rahmen der Selbstkalibrierung eine Anpassung eines Soll-Laserbehandlungslayouts für eine durch die Laserbehandlung auf das Dokument aufzubringende Information mittels einer von dem zumindest einen Lageparameter abhängigen Transformation in ein tatsächlich zu erzeugendes, lagekompensiertes Laserbehandlungslayout durchzuführen.

Gemäß einigen Ausführungsformen weist die Dokumententrägereinrichtung eine Fixiereinrichtung zum Fixieren eines durch die Dokumententrägereinrichtung getragenen Dokuments während des Durchlaufens ihrer Bahnkurve auf. So kann erreicht werden, dass das Dokument während seiner gemeinsamen Bewegung mit der es tragenden Dokumententrägereinrichtung auch beim Auftreten von Richtungsänderungen oder anderen Beschleunigungen seine Lage relativ zu der Dokumententrägereinrichtung beibehält. Folglich ist es damit zum einen mit der Dokumententrägereinrichtung fest verbunden, sodass es dessen Bahnkurve folgen kann. Zum anderen ist damit jedoch auch die Lage, insbesondere die Orientierung, des Dokuments relativ zur Dokumenttragefläche fixierbar, was wiederum vorteilhaft im Zusammenspiel mit einer temporären Arretierung der Dokumenttragefläche bezüglich ihrer Drehbarkeit um die Drehachse eine feste Ausrichtung des Dokuments relativ zur Bearbeitungseinrichtung während seiner Bearbeitung, insbesondere während einzelner Bearbeitungsschritte, und somit eine Qualitätssicherung bezüglich der Bearbeitung des Dokuments ermöglicht.

Gemäß einigen Weiterbildungen weist die Dokumententrägereinrichtung eine Kavität zur zumindest teilweisen Aufnahme des Dokuments auf, wobei die Dokumenttragefläche zumindest abschnittsweise durch eine Bodenfläche der Kavität gebildet ist. Zudem weist die Fixiereinrichtung eine Klemmeinrichtung auf, die so konfiguriert ist, dass sie im Betrieb zum Fixieren des Dokuments in der Kavität das Dokument zumindest von einer Seite her temporär mit einem Druck beaufschlagt, um das Dokument gegen eine gegenüberliegende Innenwand, insbesondere die Bodenfläche, der Kavität zu pressen und es dadurch zu fixieren. Auf diese Weise lässt sich das Dokument auch angesichts der mit hohen Durchsatzraten verbundenen hohen Beschleunigungen sicher in der Dokumententrägereinrichtung mitführen und fixieren.

Dazu kann gemäß einigen Varianten die Klemmeinrichtung insbesondere ausgebildet sein, den Druck zur temporären Beaufschlagung des Dokuments zum Zwecke seiner Fixierung auf pneumatischem Wege bereitzustellen. Bei einigen dieser Varianten weist die Klemmeinrichtung dazu eine pneumatische Druckkammer auf, die konfiguriert ist, (i) an der Transferposition unter Druck befüllt zu werden und (ii) während die zugehörige Dokumententrägereinrichtung die Bahnkurve außerhalb der Transferposition durchläuft, ohne externe Zuführung von pneumatischem Druck das Dokument zum Zwecke seiner Fixierung mittels der Klemmeinrichtung mit pneumatischem Druck zu beaufschlagen. Eine solche Implementierung hat den Vorteil, dass die Fixierung des Dokuments in der entlang ihrer Bahnkurve beweglichen Dokumententrägereinrichtung autark aufrechterhalten werden kann, ohne dass dazu eine Druckbeaufschlagung von außerhalb der Dokumententrägereinrichtung, etwa mittels Druckzuführung durch pneumatische Schläuche, erforderlich ist.

Gemäß einigen anderen Varianten kann die Klemmeinrichtung mit einer als Teil der Dokumententrägereinrichtung vorgesehenen Fixiereinrichtung gekoppelt sein, die konfiguriert ist, die Stellung der Klemmeinrichtung lösbar zu arretieren, wenn diese zum Fixieren des Dokuments unter Druck auf dieses gepresst wird. Dies erlaubt besonders kurze Verweildauern an der Transferposition und somit besonders hohen Durchsatz.

Gemäß einigen Ausführungsformen weist die Dokumententrägereinrichtung eine Ausrichtungseinrichtung zum Ausrichten eines durch die Dokumententrägereinrichtung aufgenommenen Dokuments gemäß einer vorbestimmten Soll-Ausrichtung auf. Die Ausrichtungseinrichtung kann dazu insbesondere einen oder mehrere, insbesondere bewegliche, Zentrierstifte aufweisen, die eingerichtet sind, das Dokument relativ zu der es tragenden Dokumententrägereinrichtung gemäß der Soll-Ausrichtung auszurichten, insbesondere im Sinne einer Zentrierung. Diese Ausführungsformen können insbesondere anstelle der vorgenannten Lösung mittels Selbstkalibrierung oder aber additiv dazu eingesetzt werden, etwa, um vor einer feineren Selbstkalibrierung eine Grobausrichtung des Dokuments zu bewerkstelligen. Eine solche Ausrichtung dient wiederum insbesondere der Qualitätssicherung bezüglich einer ausgerichteten Bearbeitung des Dokuments.

Gemäß einigen Ausführungsformen weist die Vorrichtung des Weiteren auf: (i) eine Steuerungseinrichtung zum Steuern der Vorrichtung, und (ii) eine Sensoreinrichtung, die konfiguriert ist, an einem oder mehreren bestimmten Punkten entlang der Bahnkurve der Dokumententrägereinrichtung einen oder mehrere aktuelle Bewegungsparameter der Dokumententrägereinrichtung zu detektieren und an die Steuerungseinrichtung zu übermitteln. Dabei ist die Steuerungseinrichtung konfiguriert, die Vorrichtung in Abhängigkeit von diesen jeweiligen Bewegungsparametern zu steuern. Die Bewegungsparameter können sich insbesondere auf eine, insbesondere zeitabhängige, Position, Geschwindigkeit, Beschleunigung oder Bewegungsrichtung der Dokumententrägereinrichtung oder eine Kombination aus zwei oder mehreren der vorgenannten Bewegungsparameter beziehen und insbesondere zu einer Überwachung des fehlerfreien Betriebs der Vorrichtung dienen. Des Weiteren kann diese Sensoreinrichtung, oder optional eine weitere Sensoreinrichtung, dazu vorgesehen sein, das Beladen der Dokumententrägereinrichtung mit einem Dokument und/oder das spätere Entladen des Dokuments sensorisch zu überwachen, insbesondere im Hinblick auf die Erkennung etwaiger Fehlfunktionen.

Gemäß einigen darauf aufbauenden Ausführungsformen ist die Verfahreinrichtung eingerichtet, die Bahnkurve der Dokumententrägereinrichtung in Abhängigkeit von einer auf den Bewegungsparametern basierenden Ansteuerung durch die Steuerungseinrichtung zu variieren. Insbesondere kann dabei die Länge einzelner Abschnitte der Bahnkurve variiert werden. In einer beispielhaften Variante dazu, kann ein solcher Abschnitt in Abhängigkeit von der auf den Bewegungsparametern basierenden Ansteuerung insbesondere als geradlinige Bahnkurve oder aber als bogenförmige Bahnkurve größerer Länge ausgestaltet sein. Auf diese Weise lassen sich, insbesondere bei gleichbleibender Bahngeschwindigkeit, insbesondere temporär auftretende Schwankungen im Bewegungsablauf während des laufenden Betriebs korrigieren, um so zu einem fehlerfreien Betrieb zurückzukehren.

Gemäß einigen Ausführungsformen weist die Dokumententrägereinrichtung ein Gehäuse auf, in dem sich eine Kavität zur zumindest teilweisen Aufnahme des Dokuments befindet, wobei das Gehäuse zumindest eine Gehäuseaussparung aufweist, die so konfiguriert ist, dass durch sie hindurch eine Bearbeitung des Dokuments mittels der Bearbeitungseinrichtung ermöglicht ist, wenn sich das Dokument im Wirkbereich befindet. Auf diese Weise können zugleich eine besonders stabile Fixierung des Dokuments in der Dokumententrägereinrichtung erreicht werden als auch eine dadurch unbeeinträchtigte Bearbeitung, insbesondere Bedruckung, des Dokuments durch diese Gehäuseaussparung hindurch erfolgen. Auch andere Prozessschritte sind auf gleiche Weise in Bezug auf das Dokument durch diese Gehäuseaussparung hindurch ausführbar, beispielsweise Laserbehandlungen oder Magnetisierungen.

Gemäß einigen dieser Ausführungsformen weist das Gehäuse dabei zumindest zwei zueinander benachbarte und durch einen Zwischensteg voneinander separierte Gehäuseaussparungen auf. Diese sind jeweils so konfiguriert, dass durch sie hindurch eine Bearbeitung eines von der jeweiligen Gehäuseaussparung freigelegten Teils des Dokuments, insbesondere jeweils eine Seite eines buchartig gebundenen mehrseitigen Dokuments, mittels der Bearbeitungseinrichtung ermöglicht ist, wenn sich das Dokument im Wirkbereich befindet. Der Zwischensteg dient insbesondere als das Dokument leitendes Führungselement beim Aufnehmen oder Ausgeben des Dokuments an der Transferposition. Er kann zudem zum abschnittsweisen Niederhalten und somit zusätzlichen Fixieren des Dokuments dienen, während es sich in der Kavität des Gehäuses befindet, wie insbesondere während der Bearbeitung des Dokuments im Wirkbereich durch die Bearbeitungseinrichtung sowie während des Transports dorthin und danach wieder daraus weg.

Gemäß einigen der Ausführungsformen, bei denen die Dokumententrägereinrichtung ein Gehäuse aufweist, in dem sich eine Kavität zur zumindest teilweisen Aufnahme des Dokuments befindet, weist die Vorrichtung des Weiteren eine Niederhaltereinrichtung auf, die konfiguriert ist, temporär, wenn sich die Dokumententrägereinrichtung an der Transferposition befindet, durch deren zumindest eine Gehäuseaussparung hindurch eine Führungskraft auf das Dokument auszuüben, um dieses zumindest stellenweise niederzuhalten, während es gerade in die Kavität des Gehäuses aufgenommen oder daraus ausgegeben wird. So kann insbesondere einem Verhaken des Dokuments an einer oder mehreren Kanten der zumindest einen Gehäuseaussparung entgegengewirkt werden, um eine störungsfreie Aufnahme und Ausgabe des Dokuments an der Transferposition zu fördern.

Ein zweiter Aspekt der Erfindung betrifft ein Verfahren zum Bearbeiten von Dokumenten. Das Verfahren weist auf: (i) Aufnehmen eines zu bearbeitenden Dokuments auf einer Dokumenttragefläche einer Dokumententrägereinrichtung einer Vorrichtung zum Bearbeiten von Dokumenten, insbesondere einer Vorrichtung nach dem ersten Aspekt der Erfindung, wobei das Aufnehmen an einer Transferposition der Vorrichtung erfolgt; (ii) Verfahren der Dokumententrägereinrichtung mit dem durch sie aufgenommenen Dokument zu dessen Bearbeitung in den Wirkbereich einer Bearbeitungseinrichtung der Vorrichtung; (iii) Bearbeiten des Dokuments, wenn es sich im Wirkbereich der Bearbeitungseinrichtung befindet, um das Dokument dabei mit Informationen zu versehen; und (iv) Verfahren der Dokumententrägereinrichtung mit dem durch sie aufgenommenen Dokument nach dessen Bearbeitung aus dem Wirkbereich heraus. Dabei erfolgt das Verfahren der Dokumententrägereinrichtung wenigstens abschnittsweise zumindest bezüglich einer Bewegungsrichtungskomponente entlang einer bestimmten (ersten) Bewegungsrichtung, die orthogonal zu einer durch drei verschiedene Punkte auf der Dokumenttragefläche definierten Ebene verläuft. Dabei wird die Dokumenttragefläche vor oder während der Bearbeitung des Dokumentes durch die Bearbeitungseinrichtung um eine entlang der bestimmten (ersten) Bewegungsrichtung ausgerichtete Drehachse gedreht, sodass das Dokument innerhalb des Wirkbereichs der Bearbeitungseinrichtung in Abhängigkeit vom Drehwinkel dieser Drehung wahlweise in einer von zumindest zwei auswählbaren verschiedenen Orientierungen des Dokuments relativ zur Bearbeitungseinrichtung bearbeitet werden kann. Dieses Verfahren korrespondiert somit zu der im Rahmen des ersten Aspekts der Erfindung beschriebenen Vorrichtung, sodass die dort genannten Vorteile, Ausführungsformen bzw. Weiterbildungen gleichermaßen für das Verfahren gemäß dem zweiten Aspekt der Erfindung zur Anwendung kommen können.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt:
**Fig. 1** eine seitliche Querschnittsansicht einer Vorrichtung gemäß einer beispielhaften erfindungsgemäßen Ausführungsform;
**Fig. 2** eine perspektivische Ansicht der Dokumententrägereinrichtung mit Drehteller und einer darin ausgebildeten Kavität mit einem die Kavität überspannenden Zwischensteg, wobei der Boden der Kavität eine Dokumenttragefläche bildet;
**Fig. 3** eine weitere perspektivische Ansicht der Dokumententrägereinrichtung aus Fig. 2 mit einem um 45° gedrehten Drehteller;
**Fig. 4A** eine schematische Darstellung der Dokumententrägereinrichtung der Vorrichtung aus Fig. 1 sowie einer Fixiereinrichtung der Vorrichtung gemäß einer ersten beispielhaften Ausführungsform;
**Fig. 4B** eine schematische Darstellung der Dokumententrägereinrichtung der Vorrichtung aus Fig. 1 sowie einer Fixiereinrichtung der Vorrichtung gemäß einer zweiten beispielhaften Ausführungsform;
**Fig. 5** zeigt eine Detailansicht der Transferposition und ihrer unmittelbaren Umgebung bei einer bevorzugten Ausführungsform einer erfindungsgemäßen Vorrichtung mit einer Niederhaltereinrichtung zur Unterstützung des Beladens und Entladens der Dokumententrägereinrichtungen, wobei die Niederhaltereinrichtung in einem deaktivierten Zustand gezeigt ist;
**Fig. 6** zeigt eine Detailansicht der Transferposition und ihrer unmittelbaren Umgebung bei der Ausführungsform aus Fig. 5, wobei die Niederhaltereinrichtung in einem aktivierten Zustand gezeigt ist.
**Fig. 7** ein Flussdiagram zur Illustration eines Verfahrens zur Bearbeitung eines Dokuments gemäß einer beispielhaften Ausführungsform der Erfindung.

In den Figuren werden durchgängig dieselben Bezugszeichen für dieselben oder einander entsprechenden Elemente der Erfindung verwendet.

In der nachfolgenden detaillierten Beschreibung werden die Begriffe "x", "y" bzw. "z" oder gleichbedeutend "X", "Y" bzw. "Z" für die Bezeichnung der drei Raumrichtungen entsprechend einem kartesischen Koordinatensystem und *"φ"* als Bezeichnung für einen Drehwinkel des Drehtellers der Dokumententrägereinrichtung um eine entlang der bzw. parallel zur z-Achse verlaufenden Drehachse verwendet. Die z-Achse steht dabei senkrecht zu einer durch drei Punkte auf der Dokumenttragefläche der Dokumententrägereinrichtung definierten Ebene. Bei den gezeigten beispielhaften Ausführungsformen ist die Dokumententragfläche eben, sodass sie mit der genannten Ebene zusammenfällt. Die Z-Achse steht somit im Wesentlichen senkrecht zur Ebene des zu bearbeitenden Dokuments, wenn dieses auf der Dokumenttragefläche aufgenommen ist. Dementsprechend liegt die X-Y-Ebene des Koordinatensystems parallel zu dieser Ebene des zu bearbeitenden Dokuments.

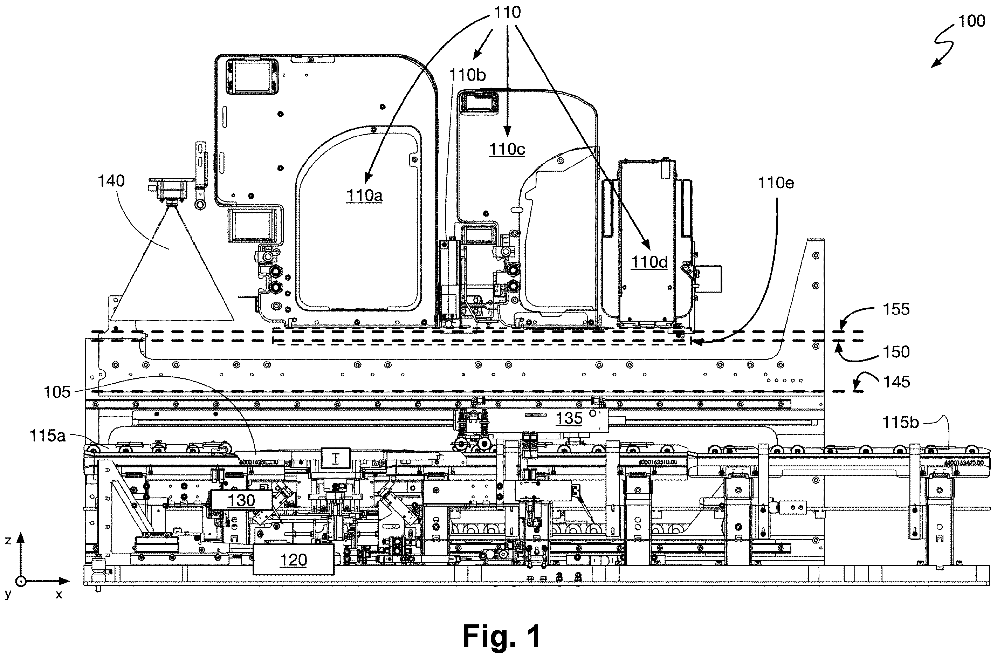

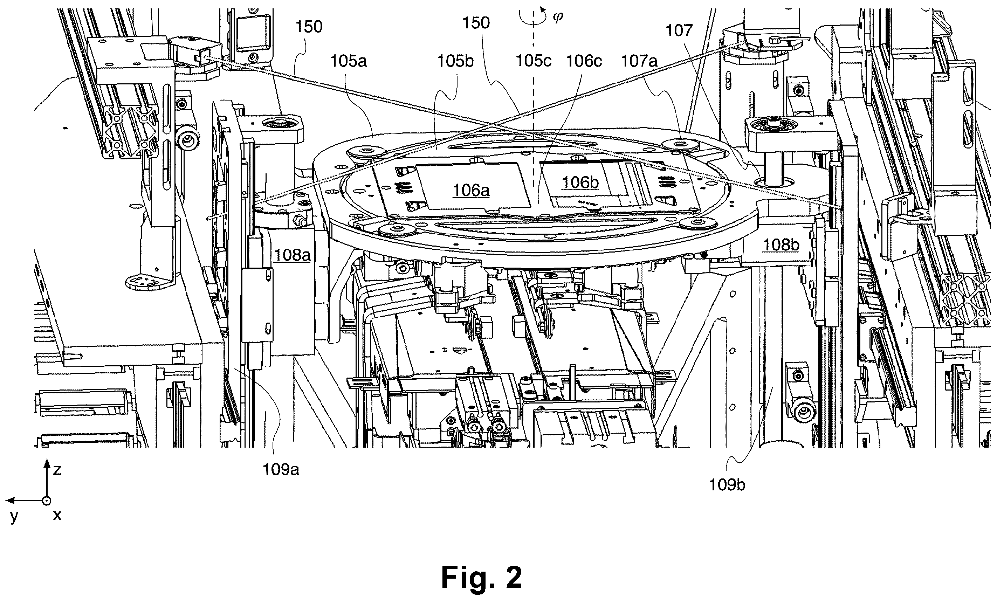

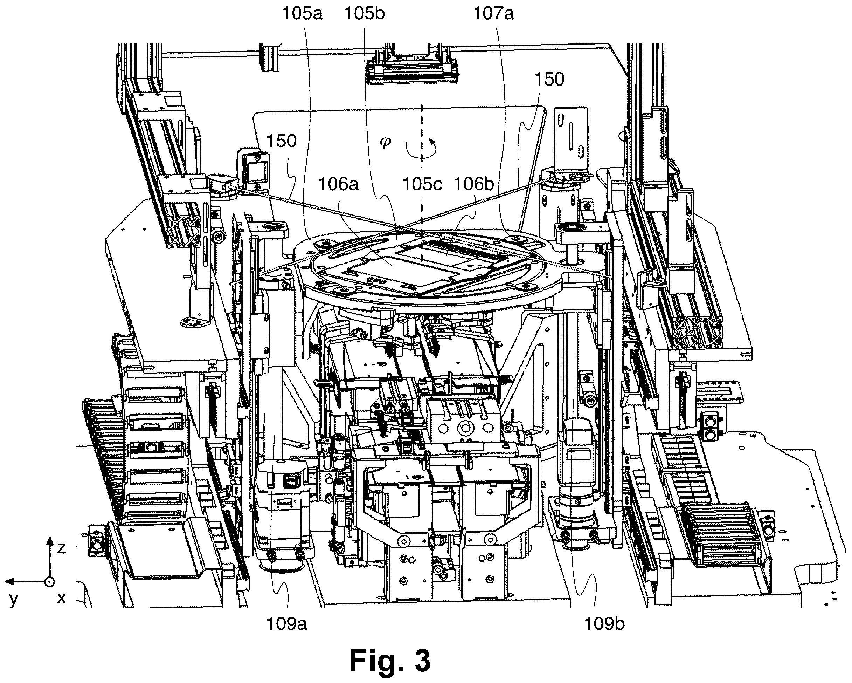

**Fig. 1** zeigt im seitlichen Querschnitt eine Vorrichtung 100 zur Bearbeitung eines Dokuments, gemäß einer beispielhaften Ausführungsform. Die Vorrichtung 100 verfügt über eine Dokumententrägereinrichtung 105 mit einem um die Z-Achse auf gesteuerte Weise drehbaren Drehteller, die in den Figuren 2 und 3 genauer dargestellt ist. Darüber hinaus verfügt die Vorrichtung 100 über ein Dokumentbearbeitungssystem 110, welches hier beispielhaft vier verschiedene Bearbeitungseinrichtungen 110a bis 110d aufweist, die dazu eingerichtet sind, ein Dokument, das mittels der Dokumententrägereinrichtung 105 entlang einer Bahnkurve in den jeweiligen Wirkbereich der Bearbeitungseinrichtungen 110a bis 110d verfahren wird, zu bearbeiten. Beispielsweise kann die erste Bearbeitungseinrichtung 110a ein Farbdrucker sein, die zweite Bearbeitungseinrichtung 110b eine Trocknungseinrichtung zum Trocknen von zuvor mit Farbdrucker gedruckter Tinte, wie etwa Farb- bzw. Monochromtinte, mittels Bestrahlung mit einer Lichtquelle, die dritte Bearbeitungseinrichtung ein Tintendrucker zum Druck von UV-Tinte (Tinte die im Wesentlichen nur im ultravioletten Spektralbereich sichtbar ist), und die vierte Bearbeitungseinrichtung 110d eine Aushärteeinrichtung zum Aushärten von zuvor gedruckter Tinte, wie etwa der UV-Tinte, mittels Bestrahlung mit einer Quelle für ultraviolettes Licht. Auch andere Bearbeitungsarten, wie etwa Aufbringen einer transparenten Tinte oder Beschichtung (z. B. "Liquid Coating") mittels einer dafür geeigneten Druckeinrichtung mit anschließendem Aushärtungsschritt, Gravur, insbesondere Lasergravur oder Übertragung von elektronischen Daten auf das Dokument über entsprechende Übertragungssignale, sind stattdessen oder kumulativ möglich. Aus Zwecken der Übersichtlichkeit ist in Fig. 1 nur der kumulierte Wirkbereich des gesamten Dokumentbearbeitungssystems 110 eingezeichnet, der jedoch die einzelnen Wirkbereiche der verschiedenen Bearbeitungseinrichtungen einschließt.

Mehrere oder nur bestimmte Bearbeitungseinrichtungen des Dokumentbearbeitungssystems 110 können von der Dokumententrägereinrichtung 105 nacheinander oder in beliebiger Reihenfolge, und zwar unabhängig von der Bearbeitungsrichtung des Dokuments oder Verfahbewegungen- bzw. richtungen der Dokumententrägereinrichtung 105 entlang der Bahnkurve, angefahren bzw. angesteuert werden. Auf diese Weise ist eine maximale Flexibilität bezüglich der möglichen Bearbeitung des Dokuments mittels der Bearbeitungseinrichtungen ermöglicht. Insbesondere erhöht sich dadurch die Geschwindigkeit solcher Bearbeitungsprozesse, bei denen die Dokumententrägereinrichtung 105 zur Bearbeitung des Dokuments nicht jede sondern nur bestimmte ausgewählte Bearbeitungseinrichtungen entlang der Bahnkurve ansteuert.

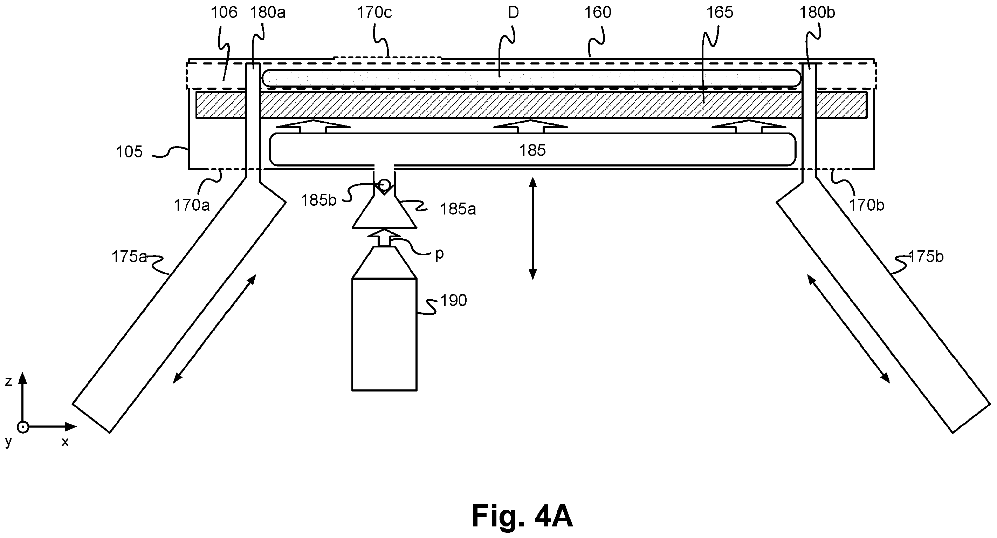

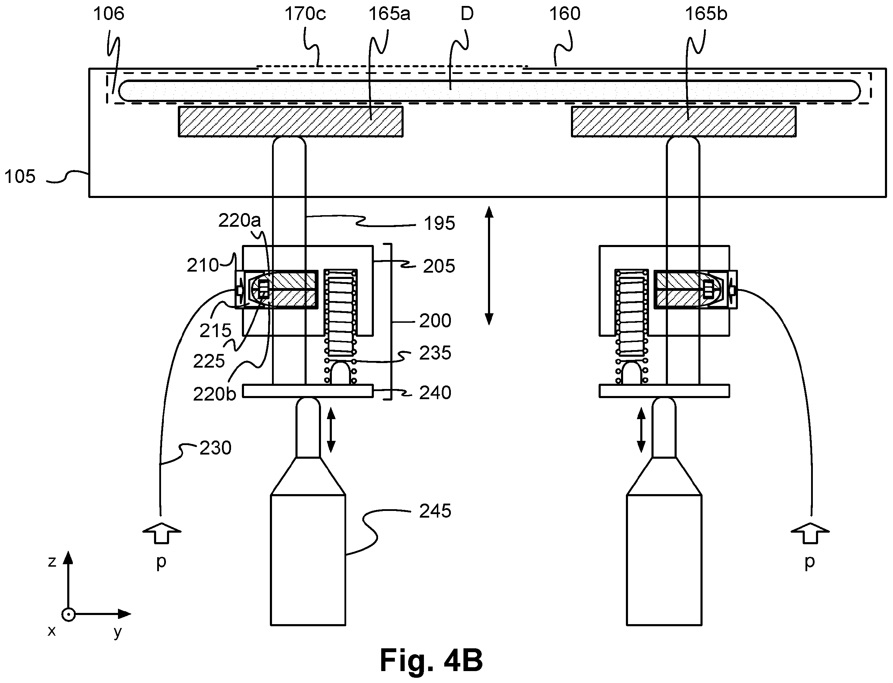

Die Vorrichtung 100 verfügt des Weiteren über eine Transporteinrichtung in Form einer Förderstrecke mit einem ersten Transportstreckenabschnitt 115a zur Zuführung von noch zu bearbeitenden Dokumenten sowie einem zweiten Transportstreckenabschnitt 115b zum Abtransport von bereits bearbeiteten Dokumenten. Das Beladen bzw. Entladen des Dokuments in bzw. von der Dokumententrägereinrichtung 105 erfolgt an einer an der Transportstrecke liegenden Position der Bahnkurve, die hier als Transferposition T bezeichnet wird. Die der Zeichnung in Fig. 1 zugehörigen und teilweis überlagerten Bezugszeichen 120 bis 140 kennzeichnen verschiedene Bereiche der Vorrichtung 100, in denen einige der eigentlichen Dokumentenbearbeitung durch das Dokumentbearbeitungssystem 110 vorgelagerte Vorbereitungsschritte stattfinden, wie nachfolgend kurz beschrieben. Beim Bezugszeichen 120 ist eine Pneumatik angesiedelt, die im Zusammenspiel mit einer Zentriereinrichtung 130 zum Ausrichten bzw. Zentrieren eines durch die Dokumententrägereinrichtung neu aufgenommen Dokuments insbesondere dazu dient, ein Dokument in der Dokumententrägereinrichtung 105 zu fixieren bzw. zu zentrieren, wie nachfolgend unter Bezugnahme auf die **Figuren 4A** **und** **4B** im Einzelnen erläutert werden wird.

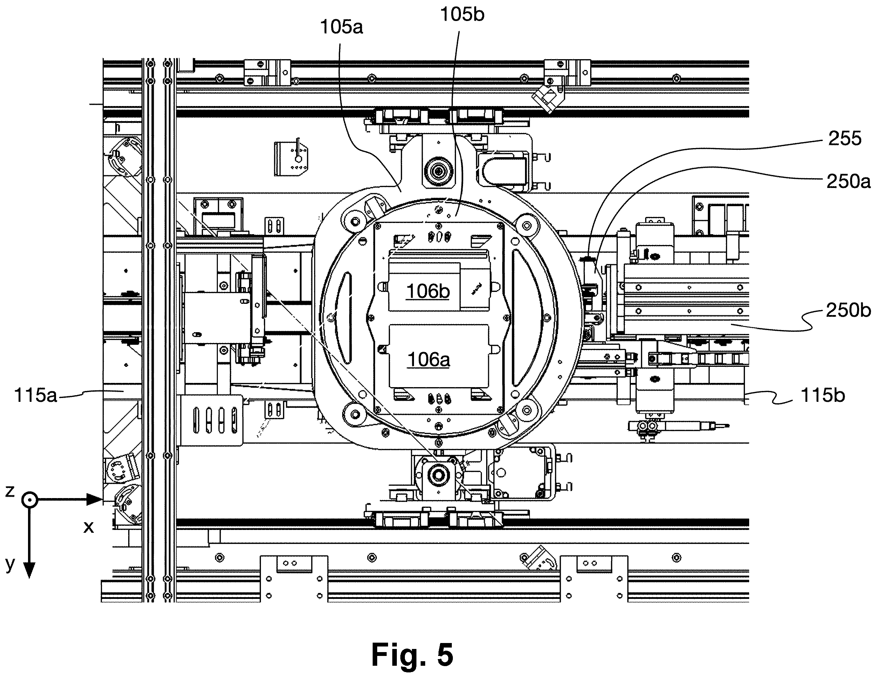

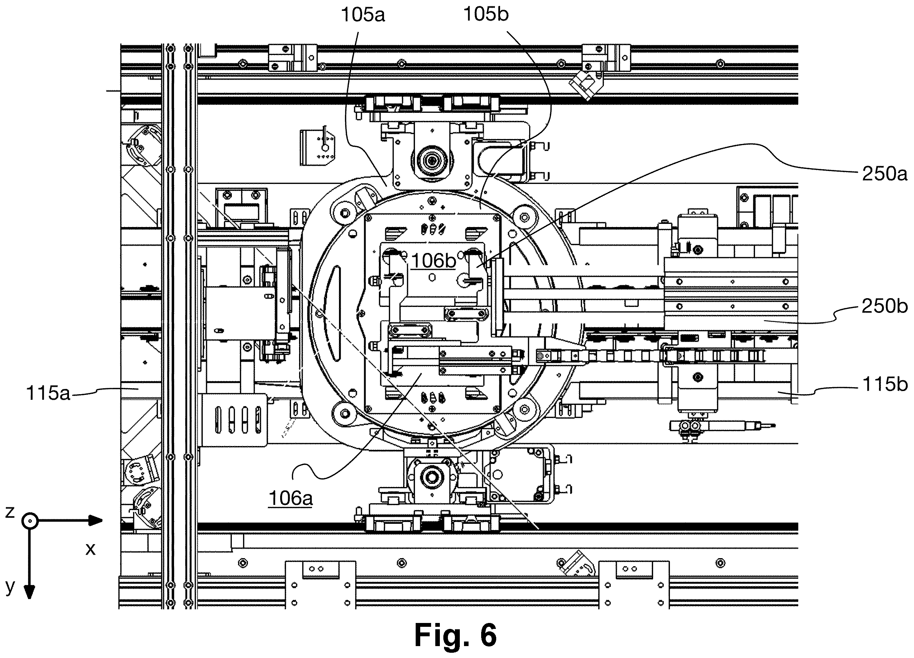

Während bestimmter Phasen der Verarbeitung eines Dokuments können zudem verfahrbare ("aktive") Niederhalter 135 zum Einsatz kommen, um das Dokument temporär auf der Dokumententrägereinrichtung zu fixieren, wie im Weiteren unter Bezugnahme auf die **Figuren 5** **und** **6** im Einzelnen erläutert werden wird.

Im Bereich 140 ist eine visuelle Kontrolle vorgesehen, die insbesondere mittels einer Kamera erfolgen und dazu dienen kann, eine Lage eines durch die Dokumententrägereinrichtung 105 aufgenommen Dokuments relativ zur Dokumententrägereinrichtung 105 zu bestimmen, um eine nachfolgende Bearbeitung des Dokuments durch das Dokumentbearbeitungssystem 110 entsprechend im Sinne einer Justierung der Bearbeitung anzupassen.

Die Bahnkurve der Dokumententrägereinrichtung 105 ist insbesondere durch die in **Fig. 1** eingezeichneten Bahnkurvenabschnitte H1 bis H7 der Bahnkurve der Dokumententrägereinrichtung 105 gekennzeichnet. In **Fig. 1** sind noch drei verschiedenen Ebenen 145, 150 und 155 eingezeichnet, die jeweils orthogonal zur Z-Richtung verlaufen. Auf diese Ebenen wird im Weiteren im Rahmen einer Erläuterung eines beispielhaften Verfahrens zum Betrieb der Vorrichtung 100 unter Bezugnahme auf Fig. 1 eingegangen werden.

In **Fig. 2** ist die Dokumententrägereinrichtung 105 der Vorrichtung 100 aus Fig. 1 in größerem Detail gezeigt. Die Dokumententrägereinrichtung 105 weist einen um eine Drehachse 105c drehbar gelagerten Drehteller 105b auf, der von einer drehfesten rahmenförmigen Randstruktur 105a eingefasst ist. Der Drehteller 105b kann gegenüber der Randstruktur 105 a von einer (nicht dargestellten) Steuerungseinrichtung der Vorrichtung 100 gesteuerte Drehungen um einen Drehwinkel *φ* um eine in Z-Richtung verlaufende Drehachse 105c, bevorzugt bidirektional, ausführen. Dabei sind zumindest zwei verschiedenen Drehwinkelwerte und somit zumindest zwei verschiedene diskrete resultierende Orientierungen des Drehtellers einstellbar. Idealerweise ist der Drehwinkel *φ* aus einer noch größeren Mehrzahl verschiedener möglicher Drehwinkelwerte auswählbar oder gar beliebig einstellbar. Die Steuerungseinrichtung kann zudem eingerichtet sein, auch die Verfahrbewegungen der Dokumententrägereinrichtung 105 zu steuern.

Im Sinne der Erfindung kann unter "Steuern" nicht nur ein Steuern, sondern auch ein Regeln (engl. feedback-control) im Sinne der Steuer- und Regelungstechnik verstanden werden. Dazu können insbesondere Bewegungsparameter als Eingangsgrößen Verwendung finden, die von einer Sensoreinrichtung der Vorrichtung 100 geliefert werden, die zur sensorischen Erfassung von Bewegungsparametern der Bewegung der Dokumententrägereinrichtung entlang ihrer Bahnkurve eingerichtet ist.

In dem Drehteller ist eine Kavität zur Aufnahme eines bearbeitenden Dokuments vorgesehen. Die zumindest abschnittsweise ebene Bodenfläche der Kavität stellt eine Dokumententragefläche des Drehtellers 105b bzw. der Dokumententrägereinrichtung 105 dar. Die Kavität kann insbesondere zwei nebeneinanderliegende, insbesondere kontinuierlich ineinander übergehende Abschnitte 106a und 106b aufweisen, die dazu vorgesehen sind jeweils eine Hälfte eines buchförmigen Dokuments, etwa eines Reisepassrohlings, im aufgeschlagenen Zustand aufzunehmen. So können beispielsweise zwei nebeneinanderliegende Seiten eines aufgeschlagenen Passdokuments gleichzeitig oder seriell, jedenfalls ohne, dass die Lage des Dokuments innerhalb der Dokumententrägereinrichtung 105 verändert werden müsste, bearbeitet werden.

Um das in der Kavität aufgenommene Dokument zu fixieren, kann - wie dargestellt - eine obere Gehäusewand eines Gehäuses der Dokumententrägereinrichtung vorgesehen sein, die neben Gehäuseaussparungen, durch die hindurch eine Bearbeitung des in dem Gehäuse der Dokumententrägereinrichtung gelagerten Dokuments erfolgen kann, einen dazwischen befindlichen Zwischensteg 106c aufweisen kann. Weitere Einzelheiten eines beispielhaften Gehäuseaufbaus werden im Weiteren unter Bezugnahme auf die Figuren 4A und 4B erläutert werden.

Zum Verfahren der Dokumententrägereinrichtung, insbesondere in Z-Richtung, weist die Vorrichtung 100 zwei Verfahreinheiten 108a und 108b auf, die über eine erste Antriebswelle 109a und eine (nicht im einzelnen dargestellte) mechanische Kraftkopplung der beiden Verfahreinheiten, angetrieben sind. Beispielsweise kann die erste Antriebswelle 109a eine Spindelwelle, d. h. mit einem Gewinde versehene Welle, sein, deren Drehbewegung in eine Längsbewegung der Dokumententrägereinrichtung 105 überträgt, die somit in Z-Richtung, also vertikal, verfahren werden kann. Eine zweite Antriebswelle 109b dient einerseits, wie die erste Antriebswelle 109a auch, als mechanische Führung für die Verfahrbewegung der Dokumententrägereinrichtung 105 entlang der Z-Richtung und andererseits zum Antrieb der Drehbewegung des Drehtellers. Diese zweite Antreibswelle 109b kann insbesondere als Rundstab bzw. Rundstange ohne Gewinde ausgebildet sein. Sie ist vorzugsweise über zumindest ein direkt an ihr angeordnetes Zahnrad 107 mit dem Drehteller kraftgekoppelt, um diesen bei Bedarf rotatorisch anzutreiben. Dazu ist die zweite Antriebswelle 109b über zumindest ein Antriebsrad, insbesondere Zahnrad 107, an den Drehteller 105b gekoppelt. Zudem können zur Lagerung oder zusätzlichen Führung des Drehtellers 105b eine oder mehrere Lagerrollen 107a vorgesehen sein Sie sind in die Randstruktur 105a integriert, sind antriebslos und mit den Nuten an ihren Sirnseiten dienen sie als eine Art Führungsrollen für den Drehteller. Das sorgt für eine noch bessere Stabilität bei der Drehbewegung des Drehtellers. In Fig. 2 sind zudem zwei sich kreuzende Überwachungsstrahlen dargestellt, die in der zweiten Z-Ebene verlaufen und hier diese kennzeichnen sollen.

**Fig. 3** zeigt die Dokumententrägereinrichtung 105 aus Fig. 2 nochmals, jedoch bei einem anderen Drehwinkel *φ,* der hier beispielhaft 45° beträgt. In fig. 3 ist die Aufhängung der Dokumententrägereinrichtung mittels einer H-förmigen Struktur, zu der auch die Verfahreinheiten 108a, b und die Wellen 109a,b, gehören, besonders gut erkennbar. Diese H-förmige Struktur ist als Ganzes mittels zumindest einen zusätzlichen Antriebs, beispielsweise mittels zweier beiderseits der Transportstrecke angeordneten Antriebe, zudem in X-Richtung verfahrbar, so dass die Dokumententrägereinrichtung insgesamt zumindest in der X-Z-Ebene verfahrbar ist und zudem der Drehteller um die Drehachse 105c drehbar ist. Es sind weiterhin auch Ausführungsformen möglich, bei denen auch eine Verfahrbarkeit der Dokumententrägereinrichtung in Y-Richtung möglich ist. Insbesondere kann dies wie für die X-Richtung über eine entsprechende Verfahrbarkeit der H-förmigen Struktur als Ganzes gelöst sein.

**Fig. 4A** stellt schematisch eine Dokumententrägereinrichtung 105 der Vorrichtung 100 sowie eine beispielhafte Fixiereinrichtung gemäß einer ersten beispielhaften Ausführungsform dazu in einer Querschnittsansicht dar, bei der die Blickrichtung senkrecht zur Transportrichtung in umgekehrter Y-Richtung verläuft. Bei dieser Ausführungsform weist die Dokumententrägereinrichtung 105 ein Gehäuse 160 auf, in dem sich unter anderen die als Dokumentenschacht ausgebildete Kavität 106 (mit ihren beiden Abschnitten 106a und 106b, wie in Fig. 2 gezeigt) befindet, die zur Aufnahme eines zu bearbeitenden Dokuments D ausgelegt ist.

Des Weiteren ist in dem Gehäuse 160 zumindest ein, beispielsweise als Anpressplatte ausgebildetes, Anpresselement 165 vorgesehen, welches mittels Drucks aus einer Druckkammer 185, welche sich ebenfalls im Gehäuse 160 befindet, beaufschlagbar ist, um dadurch in Richtung des Dokumentenschachtes 106 unter Druck bewegt zu werden. Dadurch kann ein in dem Dokumentenschacht 106 befindliches Dokument D an die gegenüberliegende Innenwand des Gehäuses 160 (in Fig. 4A ist das die obenliegende Innenwand) gepresst und somit in der Dokumententrägereinrichtung 105 fixiert werden.

Die Druckkammer 185 kann dazu mittels eines unter Druck gesetzten Gases, insbesondere im vorliegenden Beispiel Luft, über einen Gas- bzw. Lufteinlass 185a befüllt werden, insbesondere zu einem Zeitpunkt bzw. einer Stellung der Vorrichtung 100, an dem bzw. bei der sich die Dokumententrägereinrichtung 105 in der Transferposition T befindet. Wenn hierin auf Luft oder Pneumatik Bezug genommen wird ist dies als auf Luft bzw. Druckluft eingeschränkt zu verstehen. Tatsächlich können auch andere geeignete Gase oder Gasgemische gleichermaßen verwendet werden, wie etwa Stickstoff.

Zur Druckluftbefüllung der Druckkammer kann an der Transferposition T der Vorrichtung 100 eine Druckluftversorgung vorgesehen sein, welche Druckluft p durch eine Druckluftdüse 190 und über den zum Zwecke einer temporären luftdichten Verbindung passend geformten Lufteinlass 185a in die Druckkammer 185 zuführt, wenn die Dokumententrägereinrichtung 105 die Transferposition T erreicht hat und dabei mit ihrem Lufteinlass 185a auf der Druckluftdüse 190 aufgesetzt hat.

In dem Lufteinlass 185a ist zudem ein Rückschlagventil 185b vorgesehen, welches dazu eingerichtet ist, die Druckkammer 185 nach ihrer Befüllung mit Druckluft p durch die Druckluftdüse 190 luftdicht zu verschließen. Auf diese Weise kann die Druckkammer 185 den von ihr, jedenfalls mittelbar (etwa über entsprechende Pneumatikelemente) auf das Anpresselement 165 ausgeübten Druck auch dann aufrechterhalten und somit das Dokument D fixieren, wenn die Dokumententrägereinrichtung 105 die Transferposition T zum Durchlaufen ihrer Bahnkurve verlassen hat und somit von der Druckluftversorgung an der Druckluftdüse 190 abgeschnitten ist.

Des Weiteren weist das Gehäuse 160 Gehäuseaussparungen 170a, b zur Einführung jeweils eines Zentrierelements 180a, b zum Ausrichten, insbesondere Zentrieren, des Dokuments D im Dokumentenschacht 106 vor der Fixierung durch das Anpresselement 165 auf. Die Zentrierelemente 180a bzw. 180b können insbesondere als einer oder mehrere Zentrierstifte ausgebildet sein, die durch die Gehäuseaussparung 170a bzw. 170b in das Gehäuse 160 der Dokumententrägereinrichtung 105, wenn diese sich an der Transferposition T befindet, eingreifen können, um die genannte Zentrierung mittels mechanischer Wechselwirkung mit dem Dokument D vorzunehmen. Dazu können die Zentrierelemente 180a bzw. 180b, jeweils über einen linearen Aktuator 175a bzw. 175b, etwa einen Linearmotor oder einen Druckzylinder, angetrieben temporär in das Gehäuse 160 eingeführt werden. Die schräge Stellung der Aktuatoren ermöglicht es vorteilhaft sowohl das Einfahren der Zentrierstifte als auch das Zentrieren selbst mittels einer einzigen linearen Bewegung je Zentrierelement zu bewerkstelligen.

Schließlich weist das Gehäuse 160 an seiner Oberseite noch zumindest eine Gehäuseaussparung 170c zur Personalisierung des Dokuments D auf, wenn sich dieses im Wirkbereich 110e befindet. So kann insbesondere eine Bedruckung des Dokuments D durch diese Gehäuseaussparung 170c hindurch erfolgen. Auch andere Prozessschritte sind auf gleiche Weise in Bezug auf das Dokument D durch diese Gehäuseaussparung 170c hindurch ausführbar, etwa ein Trocknen von zuvor aufgedruckter Tinte oder ein Kontaktieren des Dokuments D mit Schreib- oder Leseköpfen zum Schreiben bzw. Lesen von Daten in bzw. aus einem Datenspeicher des Dokuments D.

**Fig. 4B** stellt schematisch eine Dokumententrägereinrichtung 105 der Vorrichtung 100 sowie eine beispielhafte Fixiereinrichtung dazu gemäß einer zweiten beispielhaften Ausführungsform dazu in einer Querschnittsansicht dar, bei der die Blickrichtung wieder senkrecht zur Transportrichtung, entlang der die Dokumente D durch die Transporteinrichtung 115a, b zu bzw. von der Transferposition T transportiert werden, in umgekehrter Y-Richtung verläuft. Bei dieser Ausführungsform sind als Teil der Dokumententrägereinrichtung 105 mehrere Klemmmechanismen vorgesehen, deren Funktionsweise sich jedoch gegenüber dem der Fixiereinrichtung aus Fig. 4A unterscheidet. Ansonsten entspricht die Dokumententrägereinrichtung im Wesentlichen derjenigen aus Fig. 4A, einschließlich der jeweiligen Zentrierfunktionalität.

Anstelle eines einzigen Anpresselements sind bei dieser zweiten Ausführungsform zwei (alternativ auch mehr) Anpresselemente 165a bzw. 165b vorgesehen, um das Dokument D in der Dokumententrägereinrichtung 105 wiederum durch Festpressen gegenüber der gegenüberliegenden Innenwand des Gehäuses 160 der Dokumententrägereinrichtung 105 zu fixieren. Jedem der Anpresselemente 165a bzw. 165b ist ein eigener Klemmmechanismus zugeordnet, dessen Funktionsweise nun beispielhaft anhand des Klemmmechanismus für das Anpresselement 165a erläutert werden soll.

Das Anpresselement 165a ist über eine Kolbenstange 195 mit einer Fixiereinrichtung 200 gekoppelt, welche dazu vorgesehen ist, das Anpresselement 165a zum Zwecke der Fixierung des Dokuments D gegen dieses zu pressen und in dieser Lage relativ zur Dokumententrägereinrichtung 105 zu fixieren, sowie zum nachfolgenden Freigeben des Dokuments nach dessen Bearbeitung diese Fixierung an der Transferposition T temporär zu lösen, um einen Austausch des bearbeiteten Dokuments D durch ein neues noch zu bearbeitendes Dokument zu ermöglichen.

Die Fixiereinrichtung 200 weist eine Klemmeinheit 205 mit einem Führungskanal für die Kolbenstange 195 auf, in dem diese mittels einer Klemmpatrone 210 festgeklemmt werden kann. In der Klemmpatrone 210 ist ein Formstück 215 in einer senkrecht zur Kolbenstange 195 liegenden Richtung verschiebbar angeordnet. Des Weiteren sind in der Klemmpatrone 210 zwei spiegelbildlich zueinander ausgeprägte Klemmbacken 220a und 220b vorgesehen. In einem ersten Zustand, bei dem die Klemmbacken 220a und 220b nicht durch das Formstück 215 in eine bestimmte Position gezwungen werden, werden sie mittels einer in entsprechenden gegenüberliegenden Aussparungen der beiden Klemmbacken 220a und 220b liegenden Spreizfeder 225 voneinander weg gespreizt und dadurch gegeneinander sowie gegen die Kolbenstange 195 verkanntet. Auf diese Weise wird in diesem ersten Zustand die Kolbenstange 195 durch die beiden Klemmbacken festgeklemmt und somit arretiert.

In einem anderen, zweiten Zustand, wird dagegen der Klemmpatrone 210 über eine Druckluftzuführung 230, die insbesondere als Druckluftschlauch oder -rohr ausgeführt sein kann, Druckluft p zugeführt, die in der Klemmpatrone 210 auf das Formstück 215 wirkt und dieses veranlasst, sich unter Druck im Wesentlichen senkrecht zur Kolbenstange 195 in Richtung der Klemmbacken 220a und 220b zu verschieben. Die beiden Klemmbacken 220a und 220b sind auf ihrer dem Formstück 215 zugewandten Seite so geformt, dass sie, wenn sie mit dem Formstück 215 in Kontakt kommen und durch dieses mit Druck beaufschlagt werden, aufeinander zu gepresst werden, sodass sie die Spreizfeder 225 zusammendrücken und schließlich eine im wesentlichen parallele Stellung zueinander einnehmen, wodurch die Verkantung gegenüber der Kolbenstange 195 aufgehoben und diese freigegeben wird. Dadurch kann eine ebenfalls in der Klemmeinheit 205 vorgesehene und im Wesentlichen parallel zur Kolbenstange 195 verlaufende Druckfeder 235 wirken und dabei einen von der Dokumententrägereinrichtung weg (d.h. in Fig. 4B nach unten), gerichtete Kraft auf eine Grundplatte 240 der Klemmeinheit 205 ausgeübt werden. Da auch die Kolbenstange 195 auf dieser Grundplatte 240 mit ihrem dem Anpresselement 165a gegenüberliegenden Ende angebracht ist, wirkt diese Kraft auch auf die Kolbenstange 195 und das wiederum daran befestigte Anpresselement 165a, welches somit von dem Dokument D (in Fig. 4B nach unten) weggezogen wird und dieses somit freigibt.

Soll nun nach Austausch des Dokuments das neu aufgenommene Dokument D wieder fixiert werden, so wird die Grundplatte 240 zunächst mittels eines Kolbens 245, der insbesondere als pneumatischer oder motorisch betriebener Kolben ausgebildet sein kann, in Richtung des Dokuments D verfahren, sodass das Anpresselement 10a das Dokument D schließlich mit dem zur Fixierung vorgesehenen Druck beaufschlagt. Sodann wird die Druckluft in der Klemmpatrone 210 abgelassen, wodurch das Formstück 215 mittels einer Rückstellfeder (nicht dargestellt) wieder in seine ursprüngliche Position zurückbewegt wird, die beiden Klemmbacken 220a und 220b aufgrund der nun wieder wirksamen Spreizfeder 225 gegeneinander gespreizt und gegen die Kolbenstange 195 verkanntet werden und diese somit festklemmt wird. Somit ist wieder der erste Zustand der Fixiereinrichtung 200 erreicht.

Wenn nun die Bahnkurve der Dokumententrägereinrichtung 105 erneut beginnt, bleibt das Dokument D während ihres Durchlaufs der Bahnkurve auf diese Weise im ersten Zustand fixiert bis beim erneuten Erreichen der Transferposition T wieder eine Überführung der Fixiereinrichtung 200 in den zweiten Zustand erfolgt, um den nachfolgenden Dokumentenaustausch zu ermöglichen.

Diese zweite Ausführungsform weist ebenfalls den Vorteil auf, dass die Dokumententrägereinrichtung 105 während des Durchlaufs der Bahnkurve nicht mit Anschlüssen zum Zwecke der Fixierung des Dokuments D, etwa mit pneumatischen Schläuchen oder elektrischen Anschlüssen verbunden sein muss. Des Weiteren erlaubt diese Ausführungsform auch besonders schnelle Durchlaufzeiten bzw. hohe Taktraten, da anders als bei der Ausführungsform nach Fig. 4A ein zeitbeanspruchendes Auffüllen einer Drucckammer entfällt. Das Zentrieren bzw. Ausrichten des jeweils neu aufgenommenen Dokuments D in der Transferposition T erfolgt auf gleiche Weise, wie bereits vorausgehend im Zusammenhang mit Fig. 4A beschrieben.

Die **Figuren 5** **und** **6** zeigen jeweils eine Detailansicht der Transferposition T und ihrer unmittelbaren Umgebung bei einer bevorzugten Ausführungsform der Vorrichtung 100 mit der Niederhaltereinrichtung 135 zur Unterstützung des Beladens und Entladens der Dokumententrägereinrichtung, wobei die Niederhaltereinrichtung 135 in Fig. 5 in einem deaktivierten Zustand und in **Fig. 6** in einem aktivierten Zustand gezeigt ist.

Die Niederhaltereinrichtung 135 weist insbesondere einen Niederhalter 250a und einen zugehörigen Niederhalterantrieb 250b auf. Die (sichtbare) Oberseite des Gehäuses 160 der an der Transferposition T gezeigten beispielhaften Dokumententrägereinrichtung 105 weist zwei großflächige Gehäuseaussparungen 170c auf, die durch einen zwischen ihnen verlaufenden Zwischensteg 106c voneinander separiert sind, und die so konfiguriert sind, dass durch sie hindurch im Wirkbereich 110e eine Bearbeitung des Dokuments D in der Dokumententrägereinrichtung 105 erfolgen kann. Die beiden Gehäuseaussparungen 170c können insbesondere so konfiguriert, insbesondere dimensioniert und angeordnet, sein, dass ein in der Dokumententrägereinrichtung 105 aufgenommenes buchförmiges Dokument D, wie etwa ein Reisepass, in der Dokumententrägereinrichtung 105 so zu liegen kommt, dass zwei nebeneinanderliegende Seiten des aufgeschlagenen buchförmigen Dokuments D gleichzeitig oder unmittelbar nacheinander bearbeitet werden können, wobei je eine der aufgeschlagenen Seiten durch eine zugeordnete der beiden Gehäuseaussparungen 170c größtenteils freigelegt, jedoch zugleich von der Oberseite des Gehäuses 160 im Zusammenspiel mit dem Zwischensteg 106c rahmenförmig umgeben und somit fixiert wird. So wird eine besonders effiziente Bearbeitung des fixierten buchförmigen Dokuments D durch die jeweilige Gehäuseaussparungen 170c hindurch ermöglicht. Insbesondere wird so eine (nahezu) vollflächige Passpersonalisierung der zwei nebeneinanderliegenden aufgeschlagenen Passseiten möglich. Beispielsweise ist es so möglich, die kompletten Personen- bzw. Halterdaten mit Passfoto auf die Datenseite (Holderpage) zu drucken bzw. mittels Laserbehandlung aufzubringen und/oder die andere Passseite daneben (z.B. Papierseite bzw. Seite drei im Falle eines deutschen Reisepasses), ebenfalls mit einem zusätzlichen Passfoto und/oder zusätzlichen Nutzerdaten zu bedrucken.

Die Niederhaltereinrichtung 135, ist so eingerichtet, dass sie beim Betrieb der Vorrichtung 100 temporär, wenn sich die Dokumententrägereinrichtung 105 an der Transferposition T befindet, durch deren Gehäuseaussparungen 170c hindurch eine Führungskraft auf das Dokument D auszuüben, um dieses zumindest stellenweise niederzuhalten, während es gerade in die Kavität 106 des Gehäuses 160 aufgenommen oder daraus ausgegeben wird. Die Niederhaltereinrichtung 135 weist zumindest eine Baugruppe, dievorzugsweise - wie in den **Figuren 5** **und** **6** dargestellt - auf einer Seite der Transferposition T angeordnet ist. Die Baugruppe weist dabei einen mit Führungsrollen 255 zur physischen Kontaktierung mit dem Dokument D versehenen Niederhalter 250a sowie einen Niederhalterantrieb 250b zur Aktivierung bzw. Deaktivierung des Niederhalters 250a auf. Die Führungsrollen 255 können insbesondere aus Silikon oder Kunststoff gefertigt sein. Während des Dokumententransfers beim Aufnehmen und Ausgeben des Dokuments D sorgen die Führungsrollen 255 für eine geringe Reibung, so dass trotz der großflächigen Gehäuseaussparungen 170c eine ausreichend hohe kurze Prozesszeit für den Dokumententransfer sowie eine Schonung des Dokuments D beim Transfer erreicht werden können. In einer - nicht dargestellten - Variante der Niederhaltereinrichtung 135 weist diese nicht nur einen sondern zumindest zwei Niederhalter bzw. Niederhalterbaugruppen, insbesondere mit jeweils zugeordneterm Niederhalterantrieb, auf. Die Niederhalter bzw. Baugruppen können dann insbesondere an verschiedenen Seiten zu der Transferposition T benachbart angeordnet sein, insbesondere an zwei gegenüberliegenden Seiten, wie beispielsweise zumindest ein Niederhalter am ersten Transportstreckenabschnitt 115a und ein anderer Niederhalter am zweiten Transportstreckenabschnitt 115b.

Wie in **Fig. 6** dargestellt, ist der Niederhalter 250a im aktivierten Zustand aus dem in Fig. 5 dargestellten Zustand heraus über die Gehäuseaussparungen 170c gefahren, so dass die Führungsrollen durch die Gehäuseaussparungen 170c hindurch greifen und bei den Vorgängen des Aufnehmens und Ausgebens des Dokuments D in bzw. aus der Dokumententrägereinrichtung 105 das Dokument D mit den Führungsrollen kontaktieren und unter Druckbeaufschlagung niederhalten, was insbesondere im Zusammenspiel mit einem oder mehreren der o.g. Anpresselemente 165 bzw. 165a,b erfolgen kann. So wird insbesondere der Gefahr begegnet, dass sich das Dokument beim Aufnehmen oder Ausgeben an einer Kante der Gehäuseaussparungen 170c oder im Bereich des zweiten Transportstreckenabschnitts 115b an Transportführungen verfangen oder anstoßen könnte.

Die Vorrichtung 100 ist des Weiteren so konfiguriert, dass sie, wenn der Aufnahme- bzw. Ausgabeprozess beendet ist, die Niederhalteeinrichtung wieder in den deaktivierten Zustand gemäß Fig. 5 überführt, so dass die Dokumententrägereinrichtung 105 wieder von der Niederhalteeinrichtung ungestört den nächsten Bahnkurvendurchlauf antreten kann. Der Niederhalter 250a wird über Hubzylinder angetrieben. Alternativ könnte nur ein Niederhalter 250a entweder über den ersten Transportstreckenabschnitt 115a zur Zuführung von Dokumenten oder über zweiten Transportstreckenabschnitt 115b zum Abtransport von Dokumenten vorgesehen werden. In einer weiteren - nicht dargestellten - Variante mit beidseitig der Transferposition T angeordneten Niederhaltern, werden diese über Hubzylinder, und zwar gleichzeitig, jeweils zu- und voneinander weg angetrieben.

Der Betrieb der Niederhaltereinrichtung 135 kann insbesondere nach dem folgenden Prozessschema verlaufen:
1. Wenn eine Dokumententrägereinrichtung 105 nach dem Durchlaufen der Bahnkurve an der Transferposition T ankommt, wird die Niederhaltereinrichtung aktiviert, wodurch sich der Niederhalter 250a von seiner Seite her über die Gehäuseaussparungen 170c der Dokumententrägereinrichtung 105 bewegt.
2. Das in der Dokumententrägereinrichtung 105 befindliche und bereits personalisierte Dokument wird aus der Dokumententrägereinrichtung 105 ausgegeben und das nächste noch nicht personalisierte Dokument D wird in die nunmehr gerade freigewordene Dokumententrägereinrichtung 105 aufgenommen.
3. Das noch nicht personalisierte Dokument D wird in der Dokumententrägereinrichtung 105 zentriert und geklemmt (wie vorausgehend beschrieben).
4. Die Niederhaltereinrichtung wird deaktiviert, sodass der Niederhalter 250a wieder in seine Ausgangsstellung gemäß Fig. 5 zurückbewegt wird und dabei die Transferposition T freigibt, wodurch die neu beladene Dokumententrägereinrichtung 105 die Transferposition T für einen erneuten Bahnkurvendurchlauf unbehindert verlassen kann.

Die Dokumententrägereinrichtung 105 kann zudem so konfigurierbar ausgestaltet sein, dass die Gehäuseoberseite eine auswechselbare Platte (Maske) 260 mit der zumindest einen Gehäuseaussparung 170c aufweist, so dass je nach Dokumentenart und/oder vorgesehener Personalisierung durch Umrüsten der Dokumententrägereinrichtung 105 mittels Maskentauschs auf einfache Weise eine entsprechende Anpassung der Vorrichtung erfolgen kann.

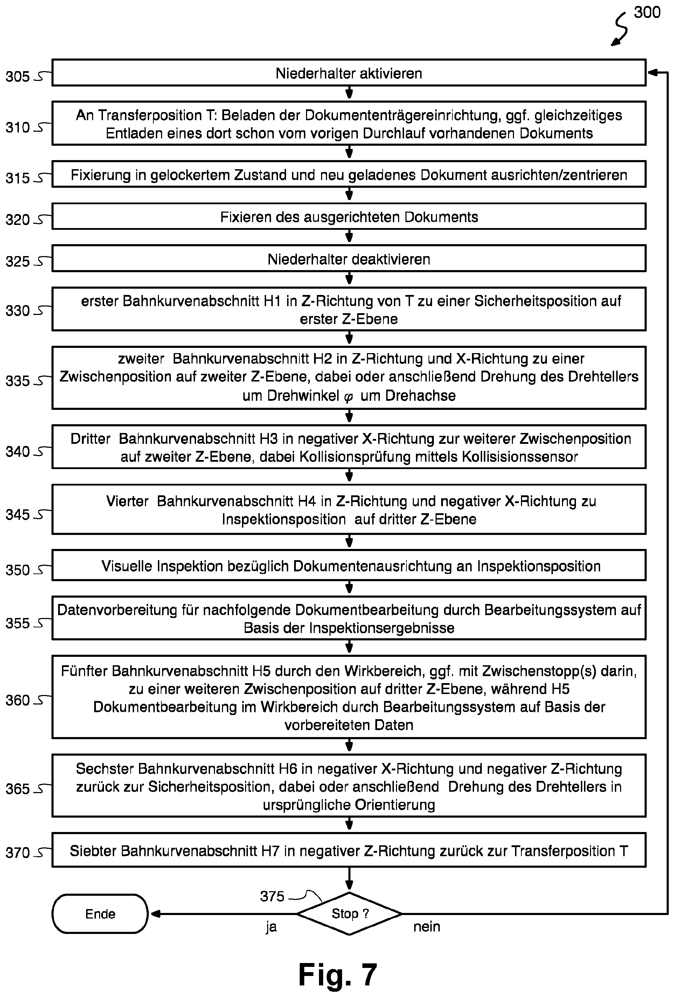

Die **Figur 7** zeigt ein Flussdiagramm zur Illustration einer Ausführungsform eines zu der Vorrichtung 100 korrespondierenden Verfahrens 300 zur Bearbeitung eines Dokuments D. Bei der nachfolgenden Beschreibung des Verfahrens wird daher auch auf die Vorrichtung 100, insbesondere auf Fig. 1, Bezug genommen.

Das Verfahren 300 beginnt mit einem Schritt 305, bei dem sich die Dokumententrägereinrichtung 105 an der Transferposition T befindet und die Niederhalteeinrichtung 135 aktiviert wird, wobei der zugehörige Niederhalter 250a in die in Fig. 6 dargestellte aktivierte Stellung gebracht wird. Die Dokumententrägereinrichtung 105 ist somit bereit, in einem weiteren Schritt 310 an der Transferposition T ein neues Dokument D zur nachfolgenden Bearbeitung durch das Dokumentbearbeitungssystem 110 aufzunehmen. Der aktivierte Niederhalter 250a dient dabei insbesondere dazu, ein Verhaken des beim nachfolgenden Beladevorgang in den Dokumentenschacht 106 einzuschiebenden Dokuments D an den Gehäuseaussparungen 170c des Gehäuses 160 der Dokumententrägereinrichtung 105 während des Beladevorgangs zu verhindern. Gleiches gilt nach erfolgtem erstmaligen Verfahrensdurchlauf sinngemäß auch für den Entladevorgang, wenn gleichzeitig mit dem Beladen, oder diesem vorgelagert, an der Transferposition T auch ein Entladen eines bereits bearbeiteten Dokuments aus der Dokumententrägereinrichtung 105 erfolgt.

Wenn das neue Dokument D in den Dokumentenschacht 106 geladen ist, wird es, je nach Ausführungsform der Dokumententrägereinrichtung 105 wie vorausgehend unter Bezugnahme auf Figur 4a bzw. Figur 4b im Einzelnen beschrieben, in einem Schritt 315 zentriert, während die Fixiereinrichtung 200 gelockert ist, und somit das Dokument D innerhalb des Dokumentenschachts 106 noch ausgerichtet werden kann. Nachfolgend wird in einem Schritt 320 die Fixiereinrichtung 200 aktiviert, um das Dokument D im Dokumentenschacht für das nachfolgende Durchlaufen der Bahnkurve zu fixieren. in einem weiteren Schritt 325 wird die Niederhalteeinrichtung 135, die nun nicht mehr benötigt wird, deaktiviert, wobei der Niederhalter 250 a in die in Fig. 5 dargestellte Stellung verbracht wird.

Sodann beginnt mit dem Schritt 330 das Durchlaufen der Bahnkurve, wobei zunächst ein erster Bahnkurvenabschnitt H1 von der Dokumententrägereinrichtung 105 mit dem darin fixierten Dokument D entlang der Z-Richtung von der Transferposition T hin zu einer Sicherheitsposition auf der ersten Z-Ebene 145 durchlaufen wird. Die Dokumententrägereinrichtung 105 wird dazu entsprechend mit der Verfahreinrichtung 108a, b bewegt.

Es folgt im Schritt 335 das Durchlaufen eines zweiten Bahnkurvenabschnitts H2, wobei diese Bewegung sowohl in Z-Richtung als auch in X-Richtung hin zu einer ersten Zwischenposition auf der zweiten Z-Ebene 150 erfolgt. Während dieses zweiten Bahnkurvenabschnitts H2 oder an seinem Ende erfolgt zudem eine Drehung des Drehtellers 105b um die Drehachse 105c um einen vorbestimmten, einer gewünschten Orientierung des Dokuments zu seiner Bearbeitung entsprechenden Drehwinkel *φ,* der insbesondere wie in diesem Beispiel 90° betragen kann.

Es schließt sich ein dritter Bahnkurvenabschnitt H3 an, der in negativer X Richtung zu einer weiteren Zwischenpositionen auf der zweiten Z-Ebene 150 verläuft. Dabei passiert die Dokumententrägereinrichtung 105 einen jeweiligen Erfassungsbereich zumindest eines Kollisionssensors, der überprüft, ob insbesondere aufgrund von Dokumentenbestandteilen, wie etwa einzelnen Seiten eines buchartigen Dokuments oder durch den bisherigen Verfahrensverlauf aufgetretene Beschädigungen des Dokuments eine Kollision des Dokuments D mit dem Dokumentbearbeitungssystem 110 droht. Auf dieselbe Weise könnte auch eine beim weiteren Bahnkurvendurchlauf drohende Kollision der Dokumententrägereinrichtung 105 selbst mit dem Dokumentbearbeitungssystem 110 oder einem anderen Teil der Vorrichtung 100 erkannt werden, was beispielsweise der Fall sein könnte, wenn eine Dejustierung oder eine Beschädigung der Dokumententrägereinrichtung 105 oder der Verfahreinrichtung 108a,b vorläge. Wenn eine solche drohende Kollision erkannt wird, wird ein entsprechendes Warnsignal ausgegeben, was insbesondere eine Sicherheitsabschaltung der Vorrichtung 100 veranlassen kann.

Es folgt im Schritt 345 ein vierter Bahnkurvenabschnitt H4, der entlang der Z-Richtung und der negativen X Richtung hin zu einer Inspektionsposition auf der dritten Z-Ebene 155 verläuft, die zugleich eine Bearbeitungsebene darstellt, da sie durch den Wirkbereich 110e verläuft, wo nachfolgend die tatsächliche Dokumentenbearbeitung erfolgen wird. An der Inspektionsposition erfolgt im Schritt 350 zunächst jedoch eine visuelle Inspektion des im Dokumentenschacht 106 geladenen Dokuments D, insbesondere im Hinblick auf seine Ausrichtung darin, im Rahmen verbleibender Toleranzen dafür. Auf Basis der Inspektionsergebnisse des Schritts 350, die insbesondere die genaue Position und Lage des Dokuments D im Dokumentenschacht 106 liefern, werden im Schritt 355 die Steuerdaten für die nachfolgende Steuerung des Dokumentbearbeitungssystems 110 vorbereitet. Beispielsweise kann ein zu der Bedruckung des Dokuments vorgesehenes Druckmuster bzw. Drucklayout, entsprechend der Position und Orientierung des Dokuments D angepasst werden, um eine optimale Justierung des zu erzeugenden Druckbilds auf dem Dokument D zu erreichen.

In dem nun nachfolgenden fünften Bahnkurvenabschnitt H5 wird im Schritt 360 die Dokumententrägereinrichtung 105 auf der dritten Z-Ebene durch den Wirkbereich 106e hindurch bis zu einer weiteren Zwischenposition bewegt, wobei in dem Wirkbereich 106e die vorgesehene Dokumentenbearbeitung durch das Dokumentbearbeitungssystem 110 auf Basis der im Schritt 355 vorbereiteten Daten erfolgt. Dabei ist es in Abhängigkeit von der Konfiguration der Vorrichtung 100 auch möglich, dass der Bahnkurvenabschnitt H5 nicht geradlinig verläuft, sondern innerhalb der Z-Ebene zwischen verschiedenen der Bearbeitungseinrichtungen 110a bis 110d einen Verlauf aufweist, der Kurvenförmig ist oder einen oder mehrere Richtungswechsel, wie etwa Richtungsumkehrpunkte, aufweist.

Nach erfolgter Bearbeitung kehrt die Dokumententrägereinrichtung 105 in einem sechsten Bahnkurvenabschnitt H6 im Schritt 365 in negativer X-Richtung und negativer Z-Richtung zur Sicherheitsposition zurück. Währenddessen oder anschließend erfolgt eine zu der im Schritt 335 vorausgegangenen Drehung inverse Drehung des Drehtellers 105b um den Drehwinkel -*φ* oder eine weitere Drehung desselben ohne Richtungsänderung u einen weiteren Winkel n·360°- *φ, (n* = 1, 2, 3, ...) sodass sich der Drehteller 105 danach wieder in seiner ursprünglichen Orientierung wie am Ausgangspunkt T der Bahnkurve befindet. Bevorzugt wird die Drehrichtung (vorwärts/Rückwärts) dieser weiteren Drehung so ausgewählt, dass bei der Drehung entlang der ausgewählten Drehrichtung der geringere der beiden zur Erreichung der ursprünglichen Orientierung zu durchlaufenden Drehwinkel durchlaufen wird.

Schließlich folgt noch ein siebter Bahnkurvenabschnitt H7, der in negativer Z-Richtung zurück zur Transferposition T führt. Der Bahnkurvenabschnitt H7 kann insofern mit dem ersten Bahnkurvenabschnitt H1 zusammenfallen, wobei er jedoch in entgegengesetzter Richtung durchlaufen wird. Wenn noch weitere Dokumente zu bearbeiten sind (375 - nein), verzweigt das Verfahren zurück zum Schritt 305 für einen erneuten Durchlauf, wobei sodann im Schritt 310 dieses Durchlaufs das bereits im vorigen Durchlauf bearbeitete Dokument D entladen und ein neues Dokument in die Dokumententrägereinrichtung geladen wird. Andernfalls (375 - ja) wird das Verfahren beendet.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand abgewichen wird.

### BEZUGSZEICHENLISTE

- 100: Vorrichtung zur Bearbeitung eines Dokuments
- 105: Dokumententrägereinrichtung mit Drehteller
- 105a: Randstruktur, insbesondere Rahmen, der Dokumententrägereinrichtung
- 105b: Drehteller
- 105c: Drehachse
- 106: Kavität, Dokumentenschacht
- 106a: Kavität, Abschnitt für eine erste aufgeschlagene Dokumentenseite
- 106b: Kavität, Abschnitt für eine zweite aufgeschlagene Dokumentenseite
- 106c: Zwischensteg zwischen den beiden Abschnitten der Kavität
- 107: Antriebsrad, insbesondere Zahnrad
- 107a: Lagerrolle
- 108a,b: Verfahreinheiten, zusammen Verfahreinrichtung
- 109a: erste Welle zum Antrieb für Verfahrbewegungen entlang Z-Richtung
- 109b: zweite Welle zum Antrieb für Drehungen des Drehtellers
- 110: Dokumentbearbeitungssystem
- 110a: erste Bearbeitungseinrichtung, insbesondere Farbdrucker
- 110b: zweite Bearbeitungseinrichtung, insbesondere Trocknungseinrichtung
- 110c: dritte Bearbeitungseinrichtung, insbesondere UV-Tintendrucker
- 110d: vierte Bearbeitungseinrichtung, insbesondere Tintenaushärter
- 110e: Wirkbereich des Dokumententrägersystems insgesamt, enthält die einzelnen Wirkbereiche der Bearbeitungseinrichtung 100a-d
- 115a: erster Transportstreckenabschnitt einer Transporteinrichtung zur Zuführung von Dokumenten
- 115b: zweiter Transportstreckenabschnitt der Transporteinrichtung zum Abtransport von Dokumenten
- 120: Pneumatik
- 130: Zentriereinrichtung mit Zentrierelementen 180a,b
- 135: Niederhaltereinrichtung mit Niederhalter 250a
- 140: visuelle Kontrolle
- 145: erste Z-Ebene mit Sicherheitsposition
- 150: von zumindest einem Kollisionssensor überwachte zweite Z-Ebene bzw. Überwachungsstrahlen solcher Kollisionssensoren
- 155: Bearbeitungsebene, zugleich dritte Z-Ebene
- 160: Gehäuse der Dokumententrägereinrichtung
- 165: Anpresselement, insbesondere Anpressplatte
- 165a, b: Anpresselemente, insbesondere Anpressplatten
- 170a, b: Gehäuseaussparungen zur Einführung eines Zentrierstifts 180a, 180b
- 170c: Gehäuseaussparung zur Personalisierung des Dokuments D
- 175a, b: lineare Aktuatoren zur Bewegung der Zentrierstifte 180a, b
- 180a, b: Zentrierelemente, insbesondere Zentrierstifte
- 185: Druckkammer
- 185a: Drucklufteinlass der Druckkammer
- 185b: Rückschlagventil zur Abdichtung des Drucklufteinlasses 185a
- 190: Druckluftdüse zur Zuführung von Druckluft zur Druckkammer
- 195: Kolbenstange
- 200: Fixiereinrichtung
- 205: Klemmeinheit
- 210: Klemmpatrone
- 215: Formstück
- 220a, b: Klemmbacken
- 225: Spreizfeder
- 230: Druckluftzuführung, insbesondere Druckluftschlauch oder Druckluftrohr
- 235: Druckfeder
- 240: Grundplatte
- 245: pneumatischer oder motorischer Kolben
- 250a: Niederhalter
- 250b: Niederhalterantrieb
- 255: Führungsrollen
- 260: Gehäuseplatte bzw. Maske

- 300: Verfahren zur Bearbeitung von Dokumenten
- 305- 375: Verfahrensschritte des Verfahrens 300

- D: Dokument
- H1-H7: Bahnkurvenabschnitte
- p: Druckluft
- T: Transferposition
- *φ*: Drehwinkel

## Patentansprüche

1. Vorrichtung (100) zum Bearbeiten eines Dokuments (D), wobei die Vorrichtung (100) aufweist:
eine Bearbeitungseinrichtung (110a; 110b; 110c; 110d) zum Versehen eines zu bearbeitenden Dokuments (D), wenn sich dieses in einem Wirkbereich (110e) der Bearbeitungseinrichtung (110a; 110b; 110c; 110d) befindet, mit Informationen; und
eine Verfahreinrichtung (108a,b) mit einer entlang einer Bahnkurve verfahrbaren Dokumententrägereinrichtung (105), wobei die Verfahreinrichtung (108a,b) konfiguriert ist:
ein zu bearbeitendes Dokument (D) an einer Transferposition (T) der Vorrichtung (100) auf oder an einer Dokumenttragefläche der Dokumententrägereinrichtung (105) aufzunehmen;
**dadurch gekennzeichnet, dass** die Verfahreinrichtung (108a,b) ferner konfiguriert ist:
mittels Verfahrens der Dokumententrägereinrichtung (105) das aufgenommene Dokument (D) zu seiner Bearbeitung in den Wirkbereich (110e) der Bearbeitungseinrichtung (110a; 110b; 110c; 110d) hinein und nach seiner Bearbeitung aus dem Wirkbereich (110e) der Bearbeitungseinrichtung heraus zu bewegen, wobei das Verfahren der Dokumententrägereinrichtung (105) dazu wenigstens in einem Abschnitt (H1) der Bahnkurve zumindest bezüglich einer Bewegungsrichtungskomponente entlang einer bestimmten Bewegungsrichtung (z) erfolgt, die orthogonal zu einer durch drei verschiedene Punkte auf der Dokumenttragefläche definierten Ebene verläuft; und
die Dokumenttragefläche um eine entlang der bestimmten Bewegungsrichtung (z) ausgerichteten Drehachse (105c) zu drehen, sodass das Dokument (D) innerhalb des Wirkbereichs (110e) der Bearbeitungseinrichtung (110a; 110b; 110c; 110d) in Abhängigkeit vom Drehwinkel (*φ*) dieser Drehung wahlweise in einer von zumindest zwei auswählbaren verschiedenen Orientierungen des Dokuments (D) relativ zur Bearbeitungseinrichtung (110a; 110b; 110c; 110d) bearbeitbar ist.

2. Vorrichtung (100) nach Anspruch 1, wobei die Verfahreinrichtung des Weiteren konfiguriert ist, die Dokumententrägereinrichtung (105) so zu verfahren, dass an zumindest einem Punkt der Bahnkurve die Dokumenttragefläche der Dokumententrägereinrichtung (105) vollständig innerhalb des Wirkbereichs (110e) der Bearbeitungseinrichtung (110a; 110b; 110c; 110d) liegt.

3. Vorrichtung (100) nach einem der vorausgehenden Ansprüche, wobei die Bearbeitungseinrichtung (110a; 110b; 110c; 110d) konfiguriert ist, das Dokument (D) mit der Bearbeitungseinrichtung (110a; 110b; 110c; 110d) in deren Wirkbereich (110e) im Sinne einer dokumentindividuellen Personalisierung zu bearbeiten.

4. Vorrichtung (100) nach einem der vorausgehenden Ansprüche, wobei die Dokumententrägereinrichtung (105) einen um die Drehachse (105c) drehbaren Drehteller (105b) mit der Dokumenttragefläche sowie eine den Drehteller (105b) zumindest abschnittsweise umgebende bezüglich der Drehachse (105c) drehfeste Rahmenstruktur (105a) aufweist.

5. Vorrichtung (100) nach einem der vorausgehenden Ansprüche, des Weiteren aufweisend eine Kollisionssensoreinrichtung, die konfiguriert ist, einen zwischen der Dokumententrägereinrichtung (105) und der Bearbeitungseinrichtung (110a; 110b; 110c; 110d) liegenden Raumbereich zu überwachen und dabei ein bestimmtes Signal auszugeben, wenn eine drohende oder bereits aufgetretene Kollision zwischen dem auf der Dokumententragefläche gelagerten Dokument (D) und der Bearbeitungseinrichtung (110a; 110b; 110c; 110d) detektiert wird.

6. Vorrichtung (100) nach einem der vorausgehenden Ansprüche, des Weiteren aufweisend eine Transporteinrichtung (115a,b), die eingerichtet ist, entlang einer Transportstrecke (115a, 115b) ein zu bearbeitendes Dokument (D) der Transferposition (T) zur Aufnahme desselben durch die Dokumententrägereinrichtung (105) zuzuführen und ein bereits von der Bearbeitungseinrichtung (110a; 110b; 110c; 110d) bearbeitetes und an der Transferposition (T) von der Dokumententrägereinrichtung (105) ausgegebenes Dokument (D) von der Transferposition (T) wegzuführen.

7. Vorrichtung (100) nach einem der vorausgehenden Ansprüche, wobei die Vorrichtung (100) des Weiteren konfiguriert ist, die Verfahrbewegung der Dokumententrägereinrichtung (105) entlang ihrer Bahnkurve so durchzuführen, dass zumindest an der Transferposition (T) ein Zwischenstopp erfolgt.

8. Vorrichtung (100) nach einem der vorausgehenden Ansprüche, wobei die Vorrichtung (100) des Weiteren konfiguriert ist:
wenn sich die Dokumententrägereinrichtung (105) an der Transferposition (T) befindet, ein gegenwärtig von der Dokumententrägereinrichtung (105) getragenes und bereits vorausgehend durch die Bearbeitungseinrichtung (110a; 110b; 110c; 110d) bearbeitetes Dokument (D) auszugeben und an dessen Stelle ein weiteres, noch durch die Bearbeitungseinrichtung (110a; 110b; 110c; 110d) zu bearbeitendes anderes Dokument durch die Dokumententrägereinrichtung (105) aufzunehmen, bevor diese ihre Bewegung für einen erneuten Durchlauf ihrer Bahnkurve fortsetzt.

9. Vorrichtung (100) nach einem der vorausgehenden Ansprüche, wobei die Bahnkurve der Dokumententrägereinrichtung (105) so als geschlossene schleifenförmige Bahnkurve festgelegt ist, dass beim Betrieb der Vorrichtung (100) diese Bahnkurve einen je Bahnkurvendurchlauf zweifach durchlaufenen Bahnkurvenabschnitt (H1) zwischen der Transferposition (T) und einer ersten Zwischenposition aufweist, wobei dieser Kurvenabschnitt (H1) einerseits im Rahmen einer Weg-Bewegung der Dokumententrägereinrichtung (105) von der Transferposition (T) zur ersten Zwischenposition und andererseits zeitlich versetzt dazu und in entgegengesetzter Richtung im Rahmen einer Hin-Bewegung der Dokumententrägereinrichtung (105) von der ersten Zwischenposition zur Transferposition (T) von der Dokumententrägereinrichtung (105) durchlaufen wird.

10. Vorrichtung (100) nach einem der vorausgehenden Ansprüche, wobei die Vorrichtung (100) des Weiteren konfiguriert ist, eine Drehung der Dokumenttragefläche um die Drehachse (105c) auszuführen, während sich die Dokumenttragefläche zumindest abschnittsweise im Wirkbereich (110e) der Bearbeitungseinrichtung (110a; 110b; 110c; 110d) befindet.

11. Vorrichtung (100) nach einem der vorausgehenden Ansprüche, wobei die Vorrichtung (100) des Weiteren konfiguriert ist, die Verfahrbewegung der Dokumententrägereinrichtung (105) getaktet gemäß einem Systemtakt auszuführen, wobei die Bahnkurve der Dokumententrägereinrichtung (105) in zumindest drei Bahnabschnitte (H1 bis H7) unterteilt ist und jeweils einer oder zwei aufeinanderfolgende Bahnabschnitte je einzelnen Takt des Systemtakts durchlaufen werden.

12. Vorrichtung (100) nach einem der vorausgehenden Ansprüche, wobei die Bahnkurve der Dokumententrägereinrichtung (105) so festgelegt ist, dass beim Betrieb der Vorrichtung (100) diese Bahnkurve einen je Bahnkurvendurchlauf mehrfach durchlaufenen Kurvenabschnitt (H5) aufweist, der durch den Wirkbereich (110e) verläuft, wobei bei zumindest zwei dieser Durchläufe durch den Kurvenabschnitt (H5) während eines selben Bahnkurvendurchlaufs jeweils eine Bearbeitung eines durch die Dokumententrägereinrichtung (105) aufgenommenen Dokuments (D) durch die Bearbeitungseinrichtung (110a; 110b; 110c; 110d) erfolgt, während sich dabei die Dokumententrägereinrichtung (105) im Wirkbereich (110e) befindet.

13. Vorrichtung (100) nach einem der vorausgehenden Ansprüche, des Weiteren aufweisend:
eine entlang der Bahnkurve der Dokumententrägereinrichtung (105) dem Wirkbereich (110e) der Bearbeitungseinrichtung (110a; 110b; 110c; 110d) vorgelagerte Inspektionseinrichtung zum Detektieren der Lage eines von der Dokumententrägereinrichtung (105) aufgenommenen Dokuments (D) bezüglich der Dokumententrägereinrichtung (105) und zur Bestimmung und Übermittlung zumindest eines diese Lage kennzeichnenden Lageparameters;
wobei die Bearbeitungseinrichtung (110a; 110b; 110c; 110d) konfiguriert ist, auf Basis von diesem zumindest einen Lageparameter eine Selbstkalibrierung zur Kompensation von etwaigen auf Basis des zumindest einen Lageparameters bestimmten Ausrichtungsabweichungen zwischen dem Dokument (D) und der Bearbeitungseinrichtung (110a; 110b; 110c; 110d) vorzunehmen, um nachfolgend auf Basis dieser Selbstkalibrierung das Dokument (D) unabhängig von seiner relativen Lage bezüglich der es tragenden Dokumententrägereinrichtung (105) zu bearbeiten.

14. Vorrichtung (100) nach einem der vorausgehenden Ansprüche, des Weiteren aufweisend:
eine Steuerungseinrichtung zum Steuern der Vorrichtung (100), und
eine Sensoreinrichtung, die konfiguriert ist, an einem oder mehreren bestimmten Punkten entlang der Bahnkurve der Dokumententrägereinrichtung (105) einen oder mehrere aktuelle Bewegungsparameter der Dokumententrägereinrichtung (105) zu detektieren und an die Steuerungseinrichtung zu übermitteln;
wobei die Steuerungseinrichtung konfiguriert ist, die Vorrichtung (100) in Abhängigkeit von diesen jeweiligen Bewegungsparametern zu steuern.

15. Verfahren (300) zum Bearbeiten von Dokumenten (D), wobei das Verfahren aufweist:
Aufnehmen (310) eines zu bearbeitenden Dokuments (D) auf einer Dokumenttragefläche einer Dokumententrägereinrichtung (105) einer Vorrichtung (100) zum Bearbeiten von Dokumenten (D), wobei das Aufnehmen (310) an einer Transferposition (T) der Vorrichtung (100) erfolgt;
**gekennzeichnet durch**:
Verfahren (360) der Dokumententrägereinrichtung (105) mit dem durch sie aufgenommenen Dokument (D) zu dessen Bearbeitung in den Wirkbereich (110e) einer Bearbeitungseinrichtung (110a; 110b; 110c; 110d) der Vorrichtung (100);
Bearbeiten (360) des Dokuments (D), wenn es sich im Wirkbereich (110e) der Bearbeitungseinrichtung (110a; 110b; 110c; 110d) befindet, um das Dokument (D) dabei mit Informationen zu versehen; und
Verfahren (H5, H6) der Dokumententrägereinrichtung (105) mit dem durch sie aufgenommenen Dokument (D) nach dessen Bearbeitung aus dem Wirkbereich (110e) heraus;
wobei das Verfahren (H1; H7) der Dokumententrägereinrichtung (105) wenigstens abschnittsweise zumindest bezüglich einer Bewegungsrichtungskomponente entlang einer bestimmten Bewegungsrichtung (z) erfolgt, die orthogonal zu einer durch drei verschiedene Punkte auf der Dokumenttragefläche definierten Ebene verläuft; und
wobei die Dokumenttragefläche vor oder während der Bearbeitung des Dokuments (D) durch die Bearbeitungseinrichtung (110a; 110b; 110c; 110d) um eine entlang der bestimmten Bewegungsrichtung ausgerichtete Drehachse (105c) gedreht wird, sodass das Dokument (D) innerhalb des Wirkbereichs (110e) der Bearbeitungseinrichtung (110a; 110b; 110c; 110d) in Abhängigkeit vom Drehwinkel (*φ*) dieser Drehung wahlweise in einer von zumindest zwei auswählbaren verschiedenen Orientierungen des Dokuments (D) relativ zur Bearbeitungseinrichtung (110a; 110b; 110c; 110d) bearbeitet werden kann.

## Claims

1. Device (100) for processing a document (D), wherein the device (100) comprises:
a processing device (110a; 110b; 110c; 110d) for providing a document (D) to be processed, when said document is located in an effective range (110e) of the processing device (110a; 110b; 110c; 110d), with information; and
a traversing device (108a,b) having a document carrier device (105) which can be traversed along a trajectory, wherein the traversing device (108a,b) is configured:
to receive a document (D) to be processed at a transfer position (T) of the device (100) on or at a document-carrying surface of the document carrier device (105);
**characterized in that**
the traversing device (108a,b) is further configured:
to move the received document (D) by traversing the document carrier device (105), into the effective range (110e) of the processing device (110a; 110b; 110c; 110d) for its processing and out of the effective range (110e) of the processing device after it has been processed, wherein the traversing of the document carrier device (105) for this purpose takes place at least in a section (H1) of the trajectory, at least with respect to a movement direction component along a specific movement direction (z) which runs orthogonally to a plane defined by three different points on the document-carrying surface; and
to rotate the document-carrying surface about an axis of rotation (105c) aligned along the specific movement direction (z), so that the document (D) can be processed within the effective range (110e) of the processing device (110a; 110b; 110c; 110d) depending on an angle of rotation (φ) of said rotation selectively in one of at least two selectable different orientations of the document (D) relative to the processing device (110a; 110b; 110c; 110d).

2. The device (100) according to claim 1, wherein the traversing device is further configured to traverse the document carrier device (105) such that, on at least one point of the trajectory, the document-carrying surface of the document carrier device (105) is completely within the effective range (110e) of the processing device (110a; 110b; 110c; 110d) .

3. The device (100) according to any one of the preceding claims, wherein the processing device (110a; 110b; 110c; 110d) is configured to process the document (D) with the processing device (110a; 110b; 110c; 110d) in its effective range (110e) in the sense of a document-specific personalization.

4. The device (100) according to any one of the preceding claims, wherein the document carrier device (105) comprises a turntable (105b) rotatable about the axis of rotation (105c) and having the document-carrying surface, and a frame structure (105a) surrounding the turntable (105b) at least in sections and rotationally fixed with respect to the axis of rotation (105c).

5. The device (100) according to any one of the preceding claims, further comprising a collision sensor device, which is configured to monitor a spatial region located between the document carrier device (105) and the processing device (110a; 110b; 110c; 110d) and to output a specific signal when an imminent or already occurred collision between the document (D) stored on the document-carrying surface and the processing device (110a; 110b; 110c; 110d) is detected.

6. The device (100) according to any one of the preceding claims, further comprising a transport device (115a, b), which is set up to feed a document (D) to be processed along a transport route (115a, 115b) to the transfer position (T) for receiving the same by the document carrier device (105) and to remove a document (D) already processed by the processing device (110a; 110b; 110c; 110d) and output by the document carrier device (105) at the transfer position (T) from the transfer position (T).

7. The device (100) according to any one of the preceding claims, wherein the device (100) is further configured to perform the traversing movement of the document carrier device (105) along its trajectory such that an intermediate stop takes place at least at the transfer position (T).

8. The device (100) according to any one of the preceding claims, wherein the device (100) is further configured:
when the document carrier device (105) is at the transfer position (T), to output a document (D) currently carried by the document carrier device (105) and already previously processed by the processing device (110a; 110b; 110c; 110d) and to receive in its place a further document still to be processed by the processing device (110a; 110b; 110c; 110d) by the document carrier device (105) before the latter continues its movement for a renewed run through its trajectory.

9. The device (100) according to any one of the preceding claims, wherein the trajectory of the document carrier device (105) is defined as a closed loop-shaped trajectory such that during operation of the device (100) this trajectory comprises a trajectory section (H1) that is traversed twice per trajectory run between the transfer position (T) and a first intermediate position, wherein this trajectory section (H1) is traversed by the document carrier device (105) on the one hand in the scope of a movement of the document carrier device (105) away from the transfer position (T) to the first intermediate position and on the other hand offset in time thereto and in the opposite direction in the scope of a movement of the document carrier device (105) from the first intermediate position to the transfer position (T).

10. The device (100) according to any one of the preceding claims, wherein the device (100) is further configured to perform a rotation of the document-carrying surface about the axis of rotation (105c) while the document-carrying surface is at least partially in the effective range (110e) of the processing device (110a; 110b; 110c; 110d).

11. The device (100) according to any one of the preceding claims, wherein the device (100) is further configured to perform the traversing movement of the document carrier device (105) in a clocked manner according to a system clock, wherein the trajectory of the document carrier device (105) is divided into at least three trajectory sections (H1 to H7) and one or two successive trajectory sections are traversed per individual clock cycle of the system clock.

12. The device (100) according to any one of the preceding claims, wherein the trajectory of the document carrier device (105) is defined such that during operation of the device (100) this trajectory comprises a trajectory section (H5) which is traversed multiple times per trajectory run and which runs through the effective range (110e), wherein for at least two of these traverses through the trajectory section (H5) during a same trajectory run, a processing of a document (D) received by the document carrier device (105) takes place by the processing device (110a; 110b; 110c; 110d) while the document carrier device (105) is in the effective range (110e).

13. The device (100) according to any one of the preceding claims, further comprising:
an inspection device for detecting the position of a document (D) received by the document carrier device (105) with respect to the document carrier device (105) and for determining and transmitting at least one position parameter characterizing this position, the inspection device being arranged at the trajectory of the document carrier device (105) upstream of the effective range (110e) of the processing device (110a; 110b; 110c; 110d);
wherein the processing device (110a; 110b; 110c; 110d) is configured to perform, on the basis of this at least one position parameter, a self-calibration for compensating for any orientation deviations between the document (D) and the processing device (110a; 110b; 110c; 110d) determined on the basis of the at least one position parameter, in order to subsequently process the document (D) on the basis of this self-calibration independently of its relative position with respect to the document carrier device (105) carrying it.

14. The device (100) according to any one of the preceding claims, further comprising:
a control device for controlling the device (100), and
a sensor device which is configured to detect one or more current movement parameters of the document carrier device (105) at one or more specific points along the trajectory of the document carrier device (105) and to transmit them to the control device;
wherein the control device is configured to control the device (100) depending on these respective movement parameters.

15. Method (300) for processing documents (D), the method comprising:
receiving (310) a document (D) to be processed on a document-carrying surface of a document carrier device (105) of a device (100) for processing documents (D), wherein the receiving (310) takes place at a transfer position (T) of the device (100);
**characterized by:**
traversing (360) the document carrier device (105) with the document (D) received by it, into the effective range (110e) of a processing device (110a; 110b; 110c; 110d) of the device (100) for its processing;
processing (360) the document (D), when said document is located in the effective range (110e) of the processing device (110a; 110b; 110c; 110d), in order to thereby provide the document (D) with information; and
traversing (H5, H6) the document carrier device (105) with the document (D) received by it, out of the effective range (110e) after the document's processing;
wherein the traversing (H1; H7) of the document carrier device (105) takes place at least in sections at least with respect to a movement direction component along a specific movement direction (z) which runs orthogonally to a plane defined by three different points on the document-carrying surface; and
wherein the document-carrying surface is rotated, before or during the processing of the document (D) by the processing device (110a; 110b; 110c; 110d), about an axis of rotation (105c) aligned along the specific movement direction, so that the document (D) can be processed within the effective range (110e) of the processing device (110a; 110b; 110c; 110d) depending on an angle of rotation (φ) of said rotation selectively in one of at least two selectable different orientations of the document (D) relative to the processing device (110a; 110b; 110c; 110d).

## Revendications

1. Dispositif (100) de traitement d'un document (D), le dispositif (100) comprenant :
un dispositif de traitement (110a ; 110b ; 110c ; 110d) pour fournir des informations à un document (D) à traiter, lorsque celui-ci se trouve dans une zone d'action (110e) du dispositif de traitement (110a ; 110b ; 110c ; 110d) ; et
un dispositif de déplacement (108a, b) avec un dispositif de support de document (105) déplaçable le long d'une trajectoire, le dispositif de déplacement (108a, b) étant configuré pour :
recevoir un document (D) à traiter à une position de transfert (T) du dispositif (100) sur ou sur une surface de support de document du dispositif de support de document (105) ;
**caractérisé en ce que** le dispositif de déplacement (108a, b) est en outre configuré pour :
au moyen d'un déplacement du dispositif de support de document (105), déplacer le document (D) reçu pour son traitement dans la zone d'action (110e) du dispositif de traitement (110a ; 110b ; 110c ; 110d) et après son traitement hors de la zone d'action (110e) du dispositif de traitement, le déplacement du dispositif de support de document (105) étant effectué à cet effet au moins dans une section (H1) de la trajectoire au moins par rapport à une composante de direction de déplacement le long d'une direction de déplacement (z) déterminée, qui s'étend orthogonalement à un plan défini par trois points différents sur la surface de support de document ; et
faire tourner la surface de support de document autour d'un axe de rotation (105c) orienté le long de la direction de déplacement (z) déterminée, de sorte que le document (D) peut être traité à l'intérieur de la zone d'action (110e) du dispositif de traitement (110a ; 110b ; 110c ; 110d) en fonction de l'angle de rotation (φ) de cette rotation au choix dans l'une d'au moins deux orientations différentes sélectionnables du document (D) par rapport au dispositif de traitement (110a ; 110b ; 110c ; 110d).

2. Dispositif (100) selon la revendication 1, dans lequel le dispositif de déplacement est en outre configuré pour déplacer le dispositif de support de document (105) de telle sorte qu'en au moins un point de la trajectoire, la surface de support de document du dispositif de support de document (105) se trouve entièrement à l'intérieur de la zone d'action (110e) du dispositif de traitement (110a ; 110b ; 110c ; 110d).

3. Dispositif (100) selon l'une quelconque des revendications précédentes, dans lequel le dispositif de traitement (110a ; 110b ; 110c ; 110d) est configuré pour traiter le document (D) avec le dispositif de traitement (110a ; 110b ; 110c ; 110d) dans sa zone d'action (110e) dans le sens d'une personnalisation individuelle au document.

4. Dispositif (100) selon l'une quelconque des revendications précédentes, dans lequel le dispositif de support de document (105) comprend un plateau tournant (105b) pouvant tourner autour de l'axe de rotation (105c) avec la surface de support de document ainsi qu'une structure de cadre (105a) entourant au moins en partie le plateau tournant (105b) de manière solidaire en rotation par rapport à l'axe de rotation (105c).

5. Dispositif (100) selon l'une quelconque des revendications précédentes, comprenant en outre un dispositif de détection de collision qui est configuré pour surveiller une zone spatiale située entre le dispositif de support de document (105) et le dispositif de traitement (110a ; 110b ; 110c ; 110d) et pour émettre un signal déterminé lorsqu'une collision imminente ou déjà survenue entre le document (D) stocké sur la surface de support de document et le dispositif de traitement (110a ; 110b ; 110c ; 110d) est détectée.

6. Dispositif (100) selon l'une quelconque des revendications précédentes, comprenant en outre un dispositif de transport (115a, b) qui est conçu pour amener le long d'un trajet de transport (115a, 115b) un document (D) à traiter à la position de transfert (T) pour recevoir celui-ci par le dispositif de support de document (105) et pour éloigner de la position de transfert (T) un document (D) déjà traité par le dispositif de traitement (110a ; 110b ; 110c ; 110d) et émis par le dispositif de support de document (105) à la position de transfert (T).

7. Dispositif (100) selon l'une quelconque des revendications précédentes, dans lequel le dispositif (100) est en outre configuré pour effectuer le mouvement de déplacement du dispositif de support de document (105) le long de sa trajectoire de telle sorte qu'un arrêt intermédiaire a lieu au moins à la position de transfert (T).

8. Dispositif (100) selon l'une quelconque des revendications précédentes, dans lequel le dispositif (100) est en outre configuré :
lorsque le dispositif de support de document (105) se trouve à la position de transfert (T), pour émettre un document (D) actuellement supporté par le dispositif de support de document (105) et déjà traité auparavant par le dispositif de traitement (110a ; 110b ; 110c ; 110d) et pour recevoir à la place de celui-ci un autre document encore à traiter par le dispositif de traitement (110a ; 110b ; 110c ; 110d) par le dispositif de support de document (105) avant que celui-ci poursuive son mouvement pour un nouveau passage de sa trajectoire.

9. Dispositif (100) selon l'une quelconque des revendications précédentes, dans lequel la trajectoire du dispositif de support de document (105) est définie comme une trajectoire en forme de boucle fermée de telle sorte que lors du fonctionnement du dispositif (100), cette trajectoire présente une section de trajectoire (H1) parcourue deux fois par passage de trajectoire entre la position de transfert (T) et une première position intermédiaire, cette section de trajectoire (H1) étant parcourue d'une part dans le cadre d'un mouvement d'éloignement du dispositif de support de document (105) de la position de transfert (T) à la première position intermédiaire et d'autre part de manière décalée dans le temps par rapport à celle-ci et dans la direction opposée dans le cadre d'un mouvement aller du dispositif de support de document (105) de la première position intermédiaire à la position de transfert (T) par le dispositif de support de document (105).

10. Dispositif (100) selon l'une quelconque des revendications précédentes, dans lequel le dispositif (100) est en outre configuré pour effectuer une rotation de la surface de support de document autour de l'axe de rotation (105c), tandis que la surface de support de document se trouve au moins en partie dans la zone d'action (110e) du dispositif de traitement (110a ; 110b ; 110c ; 110d).

11. Dispositif (100) selon l'une quelconque des revendications précédentes, dans lequel le dispositif (100) est en outre configuré pour effectuer le mouvement de déplacement du dispositif de support de document (105) de manière cadencée selon une cadence de système, la trajectoire du dispositif de support de document (105) étant divisée en au moins trois sections de trajectoire (H1 à H7) et à chaque fois une ou deux sections de trajectoire successives étant parcourues par cadence individuelle de la cadence de système.

12. Dispositif (100) selon l'une quelconque des revendications précédentes, dans lequel la trajectoire du dispositif de support de document (105) est définie de telle sorte que lors du fonctionnement du dispositif (100), cette trajectoire présente une section de trajectoire (H5) parcourue plusieurs fois par passage de trajectoire, qui s'étend à travers la zone d'action (110e), dans le cas d'au moins deux de ces passages à travers la section de trajectoire (H5) pendant un même passage de trajectoire, à chaque fois un traitement d'un document (D) reçu par le dispositif de support de document (105) étant effectué par le dispositif de traitement (110a ; 110b ; 110c ; 110d), tandis que le dispositif de support de document (105) se trouve dans la zone d'action (110e).

13. Dispositif (100) selon l'une quelconque des revendications précédentes, présentant en outre :
un dispositif d'inspection monté le long de la trajectoire du dispositif de support de document (105) en amont de la zone d'action (110e) du dispositif de traitement (110a ; 110b ; 110c ; 110d) pour détecter la position d'un document (D) reçu par le dispositif de support de document (105) par rapport au dispositif de support de document (105) et pour déterminer et transmettre au moins un paramètre de position caractérisant cette position ;
dans lequel le dispositif de traitement (110a ; 110b ; 110c ; 110d) est configuré pour effectuer, sur la base de cet au moins un paramètre de position, un autocalibrage pour la compensation d'éventuels écarts d'orientation déterminés sur la base de l'au moins un paramètre de position entre le document (D) et le dispositif de traitement (110a ; 110b ; 110c ; 110d), afin de traiter ensuite, sur la base de cet autocalibrage, le document (D) indépendamment de sa position relative par rapport au dispositif de support de document (105) le portant.

14. Dispositif (100) selon l'une quelconque des revendications précédentes, présentant en outre :
un dispositif de commande pour commander le dispositif (100), et
un dispositif de capteur qui est configuré pour détecter, en un ou plusieurs points déterminés le long de la trajectoire du dispositif de support de document (105), un ou plusieurs paramètres de mouvement actuels du dispositif de support de document (105) et pour les transmettre au dispositif de commande ;
dans lequel le dispositif de commande est configuré pour commander le dispositif (100) en fonction de ces paramètres de mouvement respectifs.

15. Procédé (300) de traitement de documents (D), le procédé comprenant :
la réception (310) d'un document (D) à traiter sur une surface de support de document d'un dispositif de support de document (105) d'un dispositif (100) de traitement de documents (D), la réception (310) ayant lieu à une position de transfert (T) du dispositif (100) ;
**caractérisé par** :
le déplacement (360) du dispositif de support de document (105) avec le document (D) reçu par lui pour son traitement dans la zone d'action (110e) d'un dispositif de traitement (110a ; 110b ; 110c ; 110d) du dispositif (100) ;
le traitement (360) du document (D), lorsqu'il se trouve dans la zone d'action (110e) du dispositif de traitement (110a ; 110b ; 110c ; 110d), pour fournir des informations au document (D) ; et
le déplacement (H5, H6) du dispositif de support de document (105) avec le document (D) reçu par lui après son traitement hors de la zone d'action (110e) ;
le déplacement (H1 ; H7) du dispositif de support de document (105) étant effectué au moins en partie au moins par rapport à une composante de direction de déplacement le long d'une direction de déplacement (z) déterminée, qui s'étend orthogonalement à un plan défini par trois points différents sur la surface de support de document ; et
la surface de support de document étant tournée avant ou pendant le traitement du document (D) par le dispositif de traitement (110a ; 110b ; 110c ; 110d)autour d'un axe de rotation (105c) orienté le long de la direction de déplacement déterminée, de sorte que le document (D) peut être traité à l'intérieur de la zone d'action (110e) du dispositif de traitement (110a ; 110b ; 110c ; 110d) en fonction de l'angle de rotation (φ) de cette rotation au choix dans l'une d'au moins deux orientations différentes sélectionnables du document (D) par rapport au dispositif de traitement (110a ; 110b ; 110c ; 110d).
